# EUROPÄISCHE PATENTSCHRIFT

(11) **EP 2 699 446 B1**
(45) Veröffentlichungstag und Bekanntmachung des Hinweises auf die Patenterteilung: **20.05.2015**
(21) Anmeldenummer: 12715053.0
(22) Anmeldetag: 10.04.2012
(51) Int. Cl.: B60L 11/18, H01R 13/00

(54) **FAHRZEUGLADEVORRICHTUNG**
VEHICLE CHARGING DEVICE
DISPOSITIF DE CHARGE POUR VÉHICULE

(30) Priorität: 21.04.2011 DE 102011007839
(43) Veröffentlichungstag der Anmeldung: 26.02.2014
(73) Patentinhaber: Bayerische Motoren Werke Aktiengesellschaft, 80809 München (DE)
(72) Erfinder: HERZOG, Torsten, 80796 München (DE)
(86) Internationale Anmeldenummer: PCT/EP2012/056411
(87) Internationale Veröffentlichungsnummer: WO 2012/143254

(56) Entgegenhaltungen:
- EP-A2- 2 281 711
- WO-A1-2010/060370
- DE-A1- 4 446 406
- DE-A1-102009 034 886

## Beschreibung

Die Erfindung betrifft eine Fahrzeugladevorrichtung, umfassend eine Ladestation außerhalb eines Fahrzeugs, ein Ladekabel und eine Ladeelektrik des Fahrzeugs, zum Laden eines elektrischen Energiespeichers des Fahrzeugs mit elektrischer Energie aus einem externen Wechselstromnetz.

Im individuellen Personennahverkehr gewinnen elektrische Antriebsarten wie Hybridantriebe oder reine Elektroantriebe an Bedeutung. Eine Hauptkomponente des elektrischen Traktionsstrangs ist der elektrische Energiespeicher, der meist eine Ruhepotentiallage im Hochvoltbereich aufweist. Dieser Energiespeicher wird auch als Hochvoltbatterie bezeichnet und kann bei Elektrofahrzeugen und bei Plug-in-Hybriden elektrische Leistung von einer äußeren Quelle zugeführt werden, um sie zu laden. Ein Ladevorgang kann konduktiv, d.h. kabelgebunden, oder induktiv, d.h. berührungslos, erfolgen. Bei den gängigen kabelgebundenen Ladetechniken wird das Fahrzeug über ein Ladekabel mit einer Ladestation, Ladesäule oder Wall-Box verbunden. In dem Dokument EP 0 610 258 B1 ist beispielsweise eine Ladestation beschrieben, die zum Laden der Batterie ein Fahrzeug mit einer Gleichstrom-Ladeelektrik speist. Die Schrift AT 507 605 A1 beschreibt hingegen eine Stromtankstelle für Elektrofahrzeuge, die 1-phasigen oder 3-phasigen Wechselstrom bereitstellt. Das Elektrofahrzeug muss in diesem Fall über ein Ladegerät verfügen, um die Batterie an der Tankstelle laden zu können. An diesem Stand der Technik ist nachteilig, dass nicht jedes elektrifizierte Fahrzeug, das über eine externe Lademöglichkeit verfügt, mit jeder Ladestation oder Stromtankstelle kompatibel ist. Eine Vielfalt von Ladestationen, Ladekabeln und Ladearchitekturen der Fahrzeuge führt zu Komforteinbußen für den Anwender, da sein Fahrzeug nur an bestimmten Ladestationen nachgeladen werden kann. Umgekehrt ist es nachteilig für die Auslastung einer Ladesäule, wenn daran nur Fahrzeuge bestimmten Typs geladen werden können. Dies kann sich auch in hohen Kosten für den Anwender auswirken, wenn im privaten Bereich in die Installation von Ladetechnik investiert werden muss, die spezifisch für das Fahrzeug entwickelt und produziert wurde. Der Stand der Technik beschreibt auch Ladekabelstecker zur Verbindung eines Elektrofahrzeugs mit einer Ladestation (siehe DE 10 2009 034 886 A1). US2004130288 offenbart eine Ladestation mit sechs elektrischen Abgriffen, die mittels eines Ladekabels mit mindestens vier elektrischen Kontakten der Ladeelektrik eines Fahrzeugs verbunden sind.

Es ist eine Aufgabe der Erfindung, eine verbesserte Fahrzeugladevorrichtung anzugeben.

Gelöst wird diese Aufgabe durch eine Fahrzeugladevorrichtung gemäß Anspruch 1. Vorteilhafte Ausführungsformen und Weiterbildungen der Erfindung ergeben sich aus den abhängigen Ansprüchen.

Erfindungsgemäß ist die Ladestation eingangsseitig aus dem externen Wechselstromnetz mit elektrischer Leistung speisbar. Das Ladekabel ist an einem Ende elektrisch mit der Ladestation verbunden oder elektrisch an die Ladestation anschließbar und über eine Stecker-Buchse-Verbindung am anderen Ende an die Ladeelektrik elektrisch anschließbar. Die Ladestation weist sechs elektrische Abgriffe und das Ladekabel sechs elektrische Leitungen auf. Die sechs elektrischen Abgriffe der Ladestation sind mit den sechs elektrischen Leitungen des Ladekabels belegungsgleich verbunden. Die sechs elektrischen Leitungen des Ladekabels sind auch mit mindestens vier elektrischen Kontakten der Ladeelektrik belegungsgleich verbunden, um den elektrischen Energiespeicher zu laden. Es ist weiterhin erfindungsgemäß, dass die Ladestation eine erste Ladesteuereinheit umfasst, die mit dem ersten elektrischen Abgriff elektrisch verbunden ist, die Ladeelektrik eine zweite Ladesteuereinheit umfasst, die mit dem ersten elektrischen Kontakt verbunden ist, und zum Laden des elektrischen Energiespeichers die erste Ladeelektronik und die zweite Ladeelektronik über die erste elektrische Leitung Daten austauschen. Die Ladestation umfasst weiterhin einen Schutzleiter, der mit dem zweiten elektrischen Abgriff verbunden ist, und die Ladeelektrik einen Schutzleiter, der mit dem zweiten elektrischen Kontakt verbunden ist, so dass zum Laden des elektrischen Energiespeichers die zweite elektrische Leitung als Schutzleitung dient. Eine erfindungsgemäße Ausprägung ist auch dadurch gegeben, dass die Ladestation einen ersten Wechselstrom-Gleichstrom-Wandler aufweist, und die Ladestation einen zweistufigen Schalter mit einer ersten Schaltstufe und einer zweiten Schaltstufe aufweist, der von der ersten Ladesteuereinheit steuerbar ist. In der ersten Schaltstufe ist der erste Wechselstrom-Gleichstrom-Wandler eingangsseitig aus dem externen Wechselstromnetz gespeist und in der zweiten Schaltstufe ist der dritte elektrische Abgriff mit der neutralen Phase des externen Wechselstromnetzes verbunden, sowie der vierte elektrische Abgriff mit einer Leitungsphase des externen Wechselstromnetzes.

In diesem Dokument ist unter dem Begriff einer belegungsgleichen Verbindung zu verstehen, dass bei einer solchen Verbindung ein bestimmter elektrischer Abgriff der Ladestation, beispielsweise ein erster elektrischer Abgriff, oder ein bestimmter elektrischer Kontakt der Ladeelektrik, beispielsweise ein erster elektrischer Kontakt, mit einer bestimmten elektrischen Leitung des Ladekabels, beispielsweise einer ersten elektrischen Leitung, verbunden ist. Eine belegungsgleiche Verbindung schließt demzufolge aus, dass im Rahmen einer bestimmungsgemäßen Verwendung die elektrischen Kontakte oder die elektrischen Abgriffe in einer anderen Kombination mit den elektrischen Leitungen verbunden werden, z.B. ein zweiter elektrischer Abgriff mit einer dritten elektrischen Leitung oder eine dritte elektrische Leitung mit einem vierten elektrischen Kontakt.

Die Erfindung bietet die Möglichkeit, ein Fahrzeug über ein Ladekabel mit sechs Adern an einer Ladestation oder einer Ladesäule anzuschließen, um die Batterie des Fahrzeugs zu laden. Die Ladesäule weist dabei sechs elektrische Abgriffe, das Ladekabel sechs elektrische Adern und die Ladeelektrik mindestens vier elektrische Kontakte auf. Es können an der Ladestation weitere elektrische Abgriffe, im Ladekabel weitere elektrische Adern und an der Ladeelektrik weitere elektrische Kontakte vorgesehen sein, die im Rahmen von Zusatzfunktionen die eigentliche Ladeaufgabe, d.h. den Transfer von elektrischer Leistung hinausgehen, ergänzen können wie etwa durch Temperaturüberwachung oder eine Kontaktverriegelung. Die Ladevorrichtung kann analog zu einer Tankstelle für Kraftstoffe als Stromtankstelle betrachtet werden.

Mit den beiden Ladesteuereinheiten wird eine Ladekommunikation zwischen Fahrzeug und Ladestation bzw. Ladesäule hergestellt. Durch den Austausch von geeigneten Informationen, beispielsweise dem Ladezustand des elektrischen Energiespeichers, ist der Ladevorgang regel- und/oder steuerbar. In den Ladesteuereinheiten sind neben der Ladekommunikation eine Ladeüberwachung und ein Lademanagement implementierbar.

Durch diese Ausgestaltung wird ermöglicht, dass die Ladestation in Abhängigkeit von der Schaltstellung des von der ersten Ladesteuereinheit steuerbaren Schalters entweder Gleichstrom oder Wechselstrom bereitstellen kann.

Vorzugsweise sind das externe Wechselstromnetz als 1-phasiges Wechselstromnetz und der erste Wechselstrom-Gleichstrom-Wandler als 1-phasiger Wechselstrom-Gleichstromwandler ausgebildet. Der erste 1-phasige Wechselstrom-Gleichstrom-Wandler ist ausgangsseitig mit dem fünften elektrischen Abgriff und dem sechsten elektrischen Abgriff verbunden.

Hierbei wird von der Ladestation in der zweiten Schaltstufe ein 1-phasiger Wechselstrom bereitgestellt.

Alternativ können das externe Wechselstromnetz als externes 3-phasiges Wechselstromnetz und der erste Wechselstrom-Gleichstrom-Wandler als 3-phasiger Wechselstrom-Gleichstrom-Wandler ausgebildet sein. Der erste 3-phasige Wechselstrom-Gleichstrom-Wandler ist ausgangsseitig über eine erstes Schaltersystem mit dem fünften elektrischen Abgriff und dem sechsten elektrischen Abgriff verbunden und in der zweiten Schaltstufe ist der fünfte elektrische Abgriff und der sechste elektrische Abgriff jeweils mit einer Leitungsphase des externen 3-phasigen Wechselstromnetzes verbunden sind.

Hierbei wird von der Ladestation in der zweiten Schaltstufe ein 3-phasiger Wechselstrom bereitgestellt.

Zweckmäßigerweise weist die Ladeelektrik ein 1-phasiges Ladegerät auf, das eingangsseitig mit dem dritten elektrischen Kontakt und dem vierten elektrischen Kontakt und ausgangsseitig mit dem elektrischen Energiespeicher verbunden ist. Der Schalter ist in die zweite Schaltstufe schaltbar ist, um den elektrischen Energiespeicher zu laden.

Auf diese Weise ist die Batterie eines Fahrzeugs mit einem 1-phasigen Ladegerät an einer Ladestation geladen werden, die 1-phasigen oder 3-phasigem Wechselstrom bereitstellt. Falls ein 3-phasiger Wechselstrom bereitgestellt wird, bleiben 2 Phasen ungenutzt.

Alternativ kann die Ladeelektrik ein 3-phasiges Ladegerät aufweisen, das eingangsseitig mit dem dritten elektrischen Kontakt, dem vierten elektrischen Kontakt, dem fünften elektrischen Kontakt und dem sechsten elektrischen Kontakt und ausgangsseitig mit dem elektrischen Energiespeicher verbunden ist. Der Schalter ist in die zweite Schaltstufe schaltbar ist, um den elektrischen Energiespeicher zu laden.

Hierbei kann die Hochvoltbatterie eines Fahrzeugs, das mit einem 3-phasigen Ladegerät ausgestattet ist, an einer Ladestation geladen werden, die 1-phasigen oder 3-phasigem Wechselstrom bereitstellt. Falls lediglich 1-phasiger Strom zur Verfügung steht, sind zwei Phaseneingänge des 3-phasigen Ladegerätes leistungslos.

Eine weitere Variante der vorliegenden Erfindung wird bei einem 1-phasigen externen Wechselstromnetz und bei einer Ladestation mit einem wie oben beschriebenen Schalter und einem 1-phasigen Wechselstrom-Gleichstrom-Wandler, der ausgangsseitig mit dem fünften elektrischen Abgriff und dem sechsten elektrischen Abgriff verbunden ist, gebildet, wenn die Ladeelektrik ein zweites Schaltersystem aufweist, das den fünften elektrischen Kontakt und den sechsten elektrischen Kontakt mit dem elektrischen Energiespeicher verbindet. Der Schalter ist in die erste Schaltstufe schaltbar und das zweite Schaltersystem schließbar, um den elektrischen Energiespeicher zu laden.

Dadurch wird ermöglicht, zum Laden das zweite Schaltersystem zu schließen und den Schalter der Ladestation in die erste Schaltstufe zu schalten. Die Ladeelektrik des Fahrzeugs wird somit mit Gleichstrom aus der Ladestation gespeist.

Wenn das externe Wechselstromnetz und die Ladestation über einen wie oben beschriebenen Schalter und einen 3-phasigen Wechselstrom-Gleichstrom-Wandler verfügt, der ausgangsseitig über ein erstes Schaltersystem mit dem fünften und dem sechsten elektrischen Abgriff verbunden ist, und wenn in der zweiten Schaltstufe der fünfte und der sechste elektrische Abgriff jeweils mit einer Leitungsphase des externen Wechselstromnetzes verbunden sind, ergibt sich weiterhin eine vorteilhafte Ausführungsform der vorliegenden Erfindung, wenn die Ladeelektrik ein zweites Schaltersystem aufweist, das den fünften elektrischen Kontakt und den sechsten elektrischen Kontakt mit dem elektrischen Energiespeicher verbindet. Der Schalter ist bei dieser Ausführungsform in die erste Schaltstufe schaltbar und das erste Schaltersystem und das zweite Schaltersystem sind schließbar, um den elektrischen Energiespeicher zu laden.

Diese Ausführungsform ermöglicht den elektrischen Energiespeicher eines Fahrzeugs mit einer derart ausgebildeten Ladeelektrik mit Gleichstrom zu laden.

Falls die Ladestation über einen wie oben beschriebenen Schalter und einen 1-phasigen Wechselstrom-Gleichstrom-Wandler verfügt, der ausgangsseitig mit dem fünften und dem sechsten elektrischen Abgriff verbunden ist, ergibt sich eine vorteilhafte Weiterentwicklung, wenn die Ladeelektrik ein 1-phasiges Ladegerät aufweist, das eingangsseitig mit dem dritten elektrischen Kontakt und dem vierten elektrischen Kontakt und ausgangsseitig mit dem elektrischen Energiespeicher verbunden ist. Ferner weist die Ladeelektrik ein zweites Schaltersystem auf, das den fünften elektrischen Kontakt und den sechsten elektrischen Kontakt mit dem elektrischen Energiespeicher verbindet. Der Schalter ist in die erste Schaltstufe schaltbar und das zweite Schaltersystem schließbar, um den elektrischen Energiespeicher zu laden. Alternativ wird der Schalter in die zweite Schaltstufe geschaltet und das zweite Schaltersystem geöffnet, um den elektrischen Energiespeicher zu laden.

Ein Fahrzeug mit einer derart ausgestalteten Ladeelektrik kann also an einer Ladestation, die aus einem 1-phasigen Wechselstromnetz gespeist wird, wahlweise mit Wechselstrom oder mit Gleichstrom geladen werden.

Falls die Ladestation über einen wie oben beschriebenen Schalter und einen 3-phasigen Wechselstrom-Gleichstrom-Wandler verfügt, der ausgangsseitig mit dem dritten und vierten elektrischen Abgriff und über ein erstes Schaltersystem mit dem fünften und dem sechsten elektrischen Abgriff verbunden ist, kann die Ladeelektrik auch ein 1-phasiges Ladegerät aufweisen, das eingangsseitig mit dem dritten elektrischen Kontakt und dem vierten elektrischen Kontakt und ausgangsseitig mit dem elektrischen Energiespeicher verbunden ist. Die Ladeelektrik weist zudem ein zweites Schaltersystem auf, das den fünften elektrischen Kontakt und den sechsten elektrischen Kontakt mit dem elektrischen Energiespeicher verbindet. Der Schalter wird in die erste Schaltstufe geschaltet, das erste und das zweite Schaltersystem werden geschlossen, um den elektrischen Energiespeicher zu laden. Alternativ wird der Schalter in die zweite Schaltstufe geschaltet und das zweite Schaltersystem geöffnet, um den elektrischen Energiespeicher zu laden.

Ein Fahrzeug mit einer derart ausgestalteten Ladeelektrik kann also an einer Ladestation, die aus einem 3-phasigen Wechselstromnetz gespeist wird, wahlweise mit Wechselstrom oder mit Gleichstrom geladen werden.

Falls die Ladestation über einen Schalter und einen 1-phasigen Wechselstrom-Gleichstrom-Wandler verfügt, der ausgangsseitig mit dem fünften und dem sechsten elektrischen Abgriff verbunden ist, weist gemäß einer weiteren Ausführungsform die Ladeelektrik ein 3-phasiges Ladegerät und ein zweites Schaltersystem auf. Dabei ist das 3-phasige Ladegerät eingangsseitig mit dem dritten elektrischen Kontakt und mit dem vierten elektrischen Kontakt und über das zweite Schaltersystem mit dem fünften elektrischen Kontakt und dem sechsten elektrischen Kontakt verbunden. Ausgangsseitig ist das 3-phasige Ladegerät mit dem elektrischen Energiespeicher verbunden. Die Ladeelektrik verfügt zudem über ein drittes Schaltersystem, das den fünften elektrischen Kontakt und den sechsten elektrischen Kontakt mit dem elektrischen Energiespeicher verbindet. Der Schalter wird in die erste Schaltstufe geschaltet, das zweite Schaltersystem geöffnet und das dritte Schaltersystem geschlossen, um den elektrischen Energiespeicher zu laden. Alternativ wird der Schalter in die zweite Schaltstufe geschaltet, um den elektrischen Energiespeicher zu laden.

Ein Fahrzeug mit einer derart ausgestalteten Ladeelektrik, insbesondere mit einem 1-phasigen Ladegerät, kann also an einer Ladestation, die aus einem 1-phasigen Wechselstromnetz gespeist wird, wahlweise mit Wechselstrom oder mit Gleichstrom geladen werden.

Falls die Ladestation über einen wie oben beschriebenen Schalter und einen 3-phasigen Wechselstrom-Gleichstrom-Wandler verfügt, der ausgangsseitig mit dem dritten und vierten elektrischen Abgriff und über ein erstes Schaltersystem mit dem fünften und dem sechsten elektrischen Abgriff verbunden ist, wirkt sich eine weitere Ausführungsform besonders vorteilhaft aus. Demnach weist die Ladeelektrik ein 3-phasiges Ladegerät und ein zweites Schaltersystem auf. Das 3-phasige Ladegerät ist eingangsseitig mit dem dritten und dem vierten elektrischen Kontakt verbunden, sowie über das zweite Schaltersystem mit dem fünften elektrischen Kontakt und dem sechsten elektrischen Kontakt. Ausgangsseitig ist es mit dem elektrischen Energiespeicher verbunden. Ferner weist die Ladeelektrik ein drittes Schaltersystem auf, das den fünften elektrischen Kontakt und den sechsten elektrischen Kontakt mit dem elektrischen Energiespeicher verbindet. Der Schalter wird in die erste Schaltstufe geschaltet, das zweite Schaltersystem wird geöffnet und das erste und dritte Schaltersystem werden geschlossen, um den elektrischen Energiespeicher zu laden. Alternativ wird der Schalter in die zweite Schaltstufe geschaltet, das zweite Schaltersystem geschlossen und das dritte Schaltersystem geöffnet, um den elektrischen Energiespeicher zu laden.

Ein Fahrzeug mit einer derart ausgestalteten Ladeelektrik, insbesondere mit einem 3-phasigen Ladegerät, kann also an einer Ladestation, die aus einem 3-phasigen Wechselstromnetz gespeist wird, wahlweise mit Wechselstrom oder mit Gleichstrom geladen werden.

Die Erfindung beruht auf den nachfolgend dargelegten Überlegungen:
Für Elektro- und Hybrid-Fahrzeuge existieren verschiedene konduktive, d.h. kabelgebundene Ladetechnologien. Eine Technologie ist das Laden mit Wechselstrom (AC-Laden), wobei sich ein Ladegerät im Fahrzeug befindet. Eine andere Technologie ist das Laden mit Gleichstrom (DC-Laden), wobei sich ein Ladegerät in der Ladestation befindet. Das DC-Laden wird häufig auch als Schnellladen bezeichnet, da bei dieser Ladetechnik die Ladeleistung üblicherweise höher ist. Für die beiden Ladetechnologien werden nach dem Stand der Technik jeweils ein Ladekabel und ein Ladestecker benötigt. Es befindet sich aktuell ein neuartiges Stecksystem, das als Combo-Stecksystem bezeichnet wird, in einem Standardisierungsprozess, siehe Normen SAE J2847-2 und IEC 61851-23. Das Stecksystem umfasst eine einzelne Ladedose am Fahrzeug mit einem einzigen Stecker, der an der Fahrzeugbuchse angeschlossen wird. Dies ist unabhängig davon, ob das Fahrzeug grundsätzlich mit Wechselstrom und/oder mit Gleichstrom gespeist werden kann. Ein Fahrzeug mit einem solchen Stecksystem kann also, sofern die weitere Ladeelektrik entsprechend ausgelegt ist, sowohl an einer AC-Ladesäule oder einer AC-Wallbox als auch an einer DC-Ladestation geladen werden.

Der Ladestecker, auch als Coupler bezeichnet, ist beim DC-Laden fest mit der Ladestation über das Ladekabel verbunden. In dem Ladekabel verlaufen diverse Leitungen für die Leistungsübertragung und für die Kommunikation zwischen Fahrzeug und Ladequelle.

Im Rahmen des aktuellen Standes der Entwicklung ist es nachteilig, dass Fahrzeuge, die lediglich über eine AC-Ladearchitektur verfügen, nicht an DC-Ladesäulen geladen werden können. Auch wird der "Kundenkreis" von DC-Ladesäulen stark eingeschränkt. Zudem werden beim Anwender technisches Unverständnis und Komforteinbußen hervorgerufen, da bei Verwendung des beschriebenen Stecksystems das Fahrzeug zwar über das Ladekabel an die Ladestation angeschlossen werden kann. In Abhängigkeit von der Ladearchitektur des Fahrzeugs und der Auslegung der Ladestation besteht unter Umständen aber keine Möglichkeit zum Laden, z.B. wenn ein Fahrzeug mit AC-Ladearchitektur an eine DC-Ladesäule gehängt wird.

Als Lösung dieses Problems wird eine kombinierte AC-DC-Ladestation vorgeschlagen. Diese erkennt durch Kommunikation mit dem Fahrzeug, ob es sich um ein Fahrzeug handelt, das mit Gleichstrom geladen werden kann. Handelt es sich um ein Fahrzeug, das nur mit Wechselstrom geladen werden kann, oder bei dem das Laden mit Gleichstrom gestört ist, schaltet die Ladestation intern eines Umschalters auf AC-Laden. Dabei wird Wechselstrom von der Wechselstromquelle über AC-Leitungen, welche auch als DC-Leitungen beim DC-Laden nutzbar sein können, an das Fahrzeug übertragen. Im Fahrzeug wird in dem Ladegerät der Wechselstrom in Gleichstrom umgewandelt. Die Batterie wird mit Gleichstrom geladen oder es werden andere elektrische Verbraucher im Fahrzeug versorgt. Handelt es sich um ein Fahrzeug, das DC-ladbar ist, schaltet die Ladestation intern mittels des Umschalters auf Laden mit Gleichstrom. Der Wechselstrom der Wechselstromquelle wird in dem AC-DC-Wandler der Ladestation in Gleichstrom umgewandelt, der über DC-Leitungen an das Fahrzeug übertragen wird. Für das DC-Laden müssen mögliche Schütze auf beiden Seiten geschlossen werden, wobei Schütze der Ladestation auch durch Dioden ersetzt sein können. Mit dem Gleichstrom wird die Batterie geladen oder es werden andere elektrische Verbraucher im Fahrzeug versorgt.

Zusammengefasst beschreibt die Erfindung eine Ladestation, die in Abhängigkeit vom angeschlossenen Fahrzeug ein AC- oder ein DC-Laden ermöglicht. Dabei werden bei beiden Lademöglichkeiten für die Ladestation und das Fahrzeug der gleiche Kabeltyp und das gleiche Stecker-Buchse-System benutzt.

Die Vorteile liegen darin, dass die Funktionalität von DC-Ladestationen erweitert ist und die Gesamtzahl von benötigten Ladestationen reduziert ist. Kostenreduzierungspotentiale ergeben sich auch daraus, dass keine verschiedenen Stecker- und Buchsensysteme für Wechselstrom- und Gleichstromladen bereitzuhalten sind. Der Anwender profitiert von einer einfachen Bedienbarkeit, da eine solche kombinierte AC-DC-Ladestätion unabhängig von der technischen Ausgestaltung der Ladearchitektur seines Fahrzeugs stets die Möglichkeit zum Laden bietet.

Im Folgenden wird anhand der beigefügten Zeichnungen ein bevorzugtes Ausführungsbeispiel der Erfindung beschrieben. Daraus ergeben sich weitere Details, bevorzugte Ausführungsformen und Weiterbildungen der Erfindung. Im Einzelnen zeigen schematisch:
Fig. 1: Ladestation mit 1-phasigem, externen Wechselstromnetz
Fig. 2: Ladestation mit 3-phasigem externen Wechselstromnetz
Fig. 3: Ladekabel
Fig. 4: Ladeelektrik zum Wechselstromladen mit 1-phasigem Ladegerät
Fig. 5: Ladeelektrik zum Wechselstromladen mit 3-phasigem Ladegerät
Fig. 6: Ladeelektrik zum Gleichstromladen
Fig. 7: Ladeelektrik zum Wechselstromladen mit 1-phasigem Ladegerät und zum Gleichstromladen
Fig. 8: Ladeelektrik zum Wechselstromladen mit 3-phasigem Ladegerät und zum Gleichstromladen
Fig. 9: Vereinfachte Ladestation mit 1-phasigem, externen Wechselstromnetz
Fig. 10: Vereinfachte Ladeelektrik zum Wechselstromladen mit 1-phasigem Ladegerät und zum Gleichstromladen

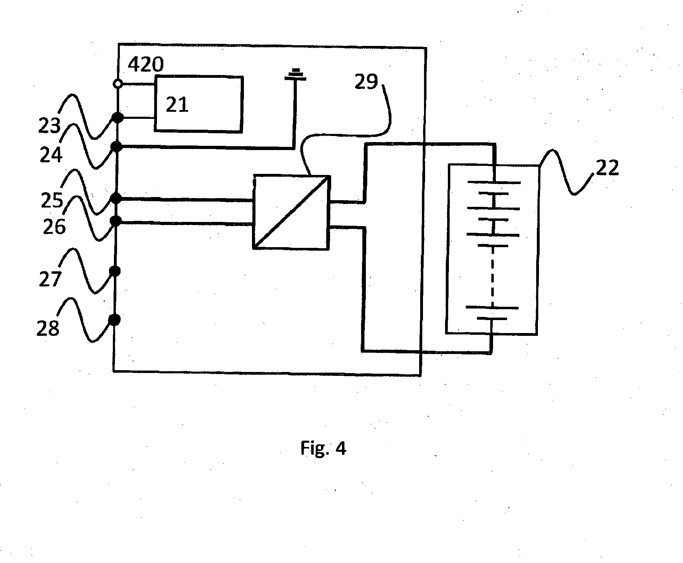

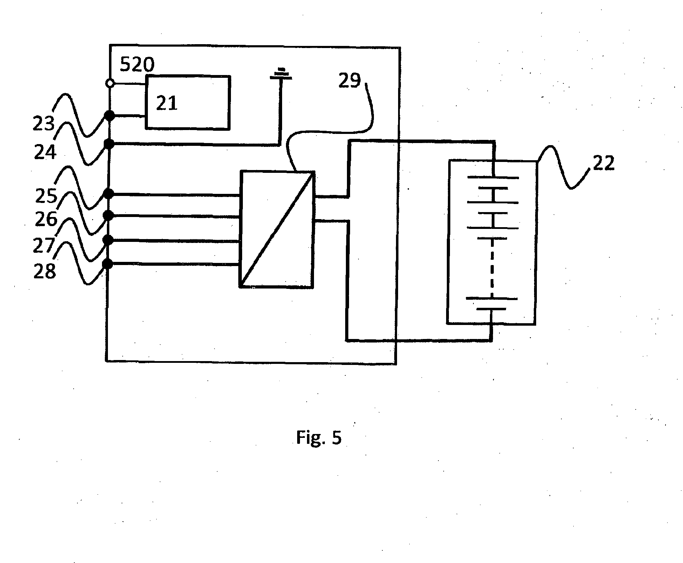

Die Bezugszeichen sind unabhängig von der Nummer der Fig. der Bezugszeichenliste zu entnehmen. Im Folgenden können einzelne Bezugszeichen je nach Fig. eine voneinander abweichende Detaillierung eines technischen Gegenstandes beschreiben. Beispielsweise wird das Bezugszeichen (29) gemäß Bezugszeichenliste in Fig. 4 und Fig. 5 auf ein Ladegerät bezogen, das in Fig. 4 weiterhin als 1-phasiges Ladegerät und in Fig. 5 weiterhin als 3-phasiges Ladegerät charakterisiert ist. Da beide Ladegeräte jeweils ein Bestandteil einer sich eben in diesem Punkt unterscheidenden Ladeelektrik sind, werden für die Ladeelektrik die separaten Bezugszeichen (420) und (520) eingeführt.

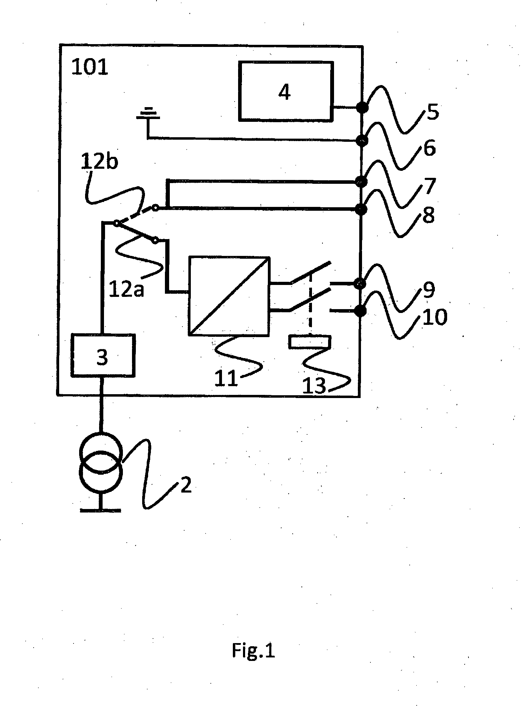

Fig. 1 zeigt eine Ladestation (101), die von einem äußeren Wechselstromnetz (2) gespeist ist, das 1-phasig ausgebildet ist. Zur Glättung der elektrischen Leistung kann ein Netzfilter (3) oder Grid-Filter zum Einsatz kommen. Die Ladestation weist eine erste Ladesteuereinheit (4) und einen ersten Wechselstrom-Gleichstrom-Wandler (11) auf. Die Ladestation weist sechs elektrische Abgriffe nach außen auf (5-10). Der erste elektrische Abgriff (5) ist mit der Ladesteuereinheit verbunden. Der zweite elektrische Abgriff (6) ist mit einer Massenschutzleitung verbunden. Die Ladestation weist einen zweistufigen Schalter auf, der in der ersten Schaltstufe (12a) den Wechselstrom-Gleichstrom-Wandler mit elektrischer Leistung speist. Dem Ausgang des Wechselstrom-Gleichstrom-Wandlers ist ein erstes Schaltersystem (13) nachgeschaltet, das den Ausgang mit dem fünften elektrischen Abgriff (9) und dem sechsten elektrischen Abgriff (10) verbindet. Der fünfte elektrische Abgriff liegt auf dem positiven Gleichstrompotential und der sechste elektrische Abgriff liegt auf dem negativen Gleichstrompotential. In der zweiten Schaltstufe (12b) verbindet der Schalter die neutrale Phase des externen Wechselstromnetzes mit dem dritten elektrischen Abgriff (7) und die Leitungsphase mit dem vierten elektrischen Abgriff (8). Eine solche Ladestation kann als Ladesäule im öffentlichen Raum oder als sogenannte Wall-Box an einem privaten Hausanschluss installiert sein.

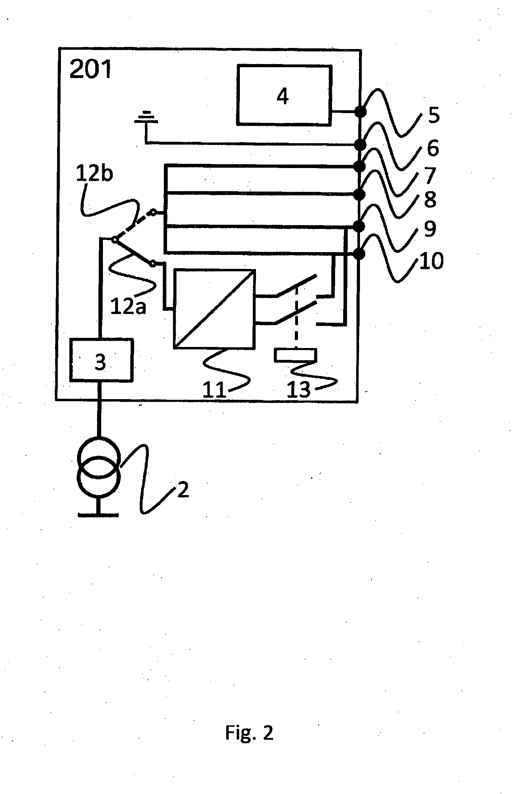

Fig. 2. zeigt eine Ladestation (201), die von einem äußeren Wechselstromnetz (2) gespeist ist, das 3-phasig ausgebildet ist. Zur Glättung der elektrischen Leistung kann ein Netzfilter (3) oder Grid-Filter zum Einsatz kommen. Die Ladestation weist eine erste Ladesteuereinheit (4) und einen ersten Wechselstrom-Gleichstrom-Wandler (11) auf. Die Ladestation weist sechs elektrische Abgriffe nach außen auf (5-10). Der erste elektrische Abgriff (5) ist mit der Ladesteuereinheit verbunden. Der zweite elektrische Abgriff (6) ist mit einer Massenschutzleitung verbunden. Die Ladestation weist einen zweistufigen Schalter auf, der in der ersten Schaltstufe (12a) den Wechselstrom-Gleichstrom-Wandler mit elektrischer Leistung speist. Dem Ausgang des Wechselstrom-Gleichstrom-Wandlers ist ein erstes Schaltersystem (13) nachgeschaltet, das den Ausgang mit fünften elektrischen Abgriff (9) und dem sechsten elektrischen Abgriff (10) verbindet. Der fünfte elektrische Abgriff liegt auf dem positiven Gleichstrompotential und der sechste elektrische Abgriff liegt auf dem negativen Gleichstrompotential. In der zweiten Schaltstufe (12b) verbindet der Schalter die neutrale Phase des externen Wechselstromnetzes mit dem dritten elektrischen Abgriff (7), eine Leitungsphase des externen Wechselstromnetzes mit dem vierten elektrischen Abgriff (8) und die beiden weiteren Leitungsphasen des externen Wechselstromnetzes mit dem fünften (9) und dem sechsten (10) elektrischen Abgriff. Eine solche Ladestation kann als Ladesäule im öffentlichen Raum oder als Wall-Box an einem privaten Hausanschluss installiert sein.

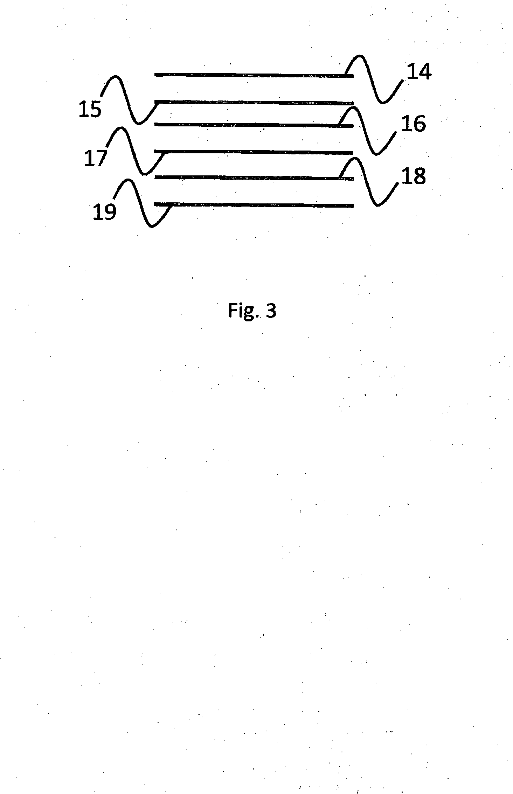

Fig. 3 zeigt ein Ladekabel mit sechs elektrischen Leitungen (14-19). Das Ladekabel kann fest mit der Ladestation aus Fig. 1 oder mit der Ladestation aus Fig. 2 verbunden sein oder reversibel verbunden werden. Hierbei ist von Bedeutung, dass eine korrekte Verbindung nur dann besteht, wenn die elektrischen Abgriffe der Ladestation belegungsgleich mit den sechs elektrischen Leitungen des Ladekabels verbunden sind. Dies bedeutet, dass der erste elektrische Abgriff (5) mit der ersten elektrischen Leitung (14), der zweite elektrische Abgriff (6) mit der zweiten elektrischen Leitung (15), der dritte elektrische Abgriff (7) mit der dritten elektrischen Leitung (16), der vierte elektrische Abgriff (8) mit der vierten elektrischen Leitung (17), der fünfte elektrische Abgriff (9) mit der fünften elektrischen Leitung (18) und der sechste elektrische Abgriff (10) mit der sechsten elektrischen Leitung (19) verbunden ist. Das Kabel kann an den beiden Enden jeweils einen Stecker oder einen Teil eines Stecksystems aufweisen, das die Kompatibilität des jeweiligen Endes entweder mit einer Buchse am Fahrzeug oder der Ladestation gewährleistet. Das zum Fahrzeug zugeordnete Ende des Ladekabels kann auch einen Stecker aufweisen, der derart ausgestaltet ist, dass den sechs elektrischen Leitungen jeweils ein Pin in dem Stecker zugeordnet ist und ein weiterer, siebter im Stecker befindlicher Pin über eine im Steckergehäuse angeordnete passive elektrische Schaltung mit der zweiten elektrischen Leitung oder dem zweiten elektrischen Pin verbunden ist. Der siebte Pin wird als Proxi-Pin bezeichnet.

Fig. 4 zeigt die Ladeelektrik (420) eines Fahrzeugs. Das Fahrzeug verfügt über einen elektrischen Energiespeicher (22). Die Ladeelektrik weist eine zweite Ladesteuereinheit (21) und eine Buchse auf, an der das in Fig. 3 beschriebene Ladekabel angeschlossen werden kann. Bevorzugt ist die Buchse leicht zugänglich an der Außenhaut des Fahrzeugs angebracht. Die Buchse verfügt über sechs elektrische Kontakte, mit denen die sechs elektrischen Leitungen des Ladekabels belegungsgleich verbunden werden. Dies bedeutet, dass bei einer belegungsgleichen Verbindung die erste elektrischen Leitung (14) mit dem ersten elektrischen Kontakt (23), die zweite elektrische Leitung (15) mit dem zweiten elektrischen Kontakt (24), die dritte elektrische Leitung (16) mit dem dritten elektrischen Kontakt (25), die vierte elektrische Leitung (17) mit dem vierten elektrischen Kontakt (26), die fünfte elektrische Leitung (18) mit dem fünften elektrischen Kontakt (27) und die sechste elektrische Leitung (19) mit dem sechsten elektrischen Kontakt (28) verbunden ist. Die zweite Ladesteuereinheit ist mit dem ersten elektrischen Kontakt (23) verbunden. Die zweite Ladesteuereinheit kann außerdem mit einem weiteren siebten elektrischen Kontakt in der Buchse verbunden sein, der als Proximity-Kontakt oder Proxi-Kontakt bezeichnet wird. Der zweite elektrische Kontakt (24) steht mit einer Massenschutzleitung in Verbindung. Die Ladeelektrik ist außerdem mit einem Wechselstrom-Gleichstrom-Wandler (29) ausgestattet, der als Ladegerät fungiert. Das Ladegerät ist eingangsseitig für 1-phasigen Wechselstrom ausgelegt, Wobei der Eingang für die Neutralphase mit dem dritten elektrischen Kontakt (25) und der Eingang für die Leitungsphase mit dem vierten elektrischen Kontakt (26) verbunden ist. Ausgangsseitig speist es den elektrischen Energiespeicher mit Ladestrom. Der fünfte elektrische Kontakt (27) und der sechste elektrische Kontakt (28) stehen mit dem Fluss von elektrischer Ladeleistung in die Ladeelektrik, um den elektrischen Energiespeicher zu laden, in keinem funktionalen Zusammenhang.

Fig. 5 zeigt die Ladeelektrik (520) eines Fahrzeugs. Das Fahrzeug verfügt über einen elektrischen Energiespeicher (22). Die Ladeelektrik weist eine zweite Ladesteuereinheit (21) und eine Buchse auf, an der das in Fig. 3 beschriebene Ladekabel angeschlossen werden kann. Bevorzugt ist die Buchse leicht zugänglich an der Außenhaut des Fahrzeugs angebracht. Die Buchse verfügt über sechs elektrische Kontakte, mit denen die sechs elektrischen Leitungen des Ladekabels belegungsgleich verbunden werden. Dies bedeutet, dass bei einer belegungsgleichen Verbindung die erste elektrischen Leitung (14) mit dem ersten elektrischen Kontakt (23), die zweite elektrische Leitung (15) mit dem zweiten elektrischen Kontakt (24), die dritte elektrische Leitung (16) mit dem dritten elektrischen Kontakt (25), die vierte elektrische Leitung (17) mit dem vierten elektrischen Kontakt (26), die fünfte elektrische Leitung (18) mit dem fünften elektrischen Kontakt (27) und die sechste elektrische Leitung (19) mit dem sechsten elektrischen Kontakt (28) verbunden ist. Die zweite Ladesteuereinheit ist mit dem ersten elektrischen Kontakt (23) verbunden. Die zweite Ladesteuereinheit kann außerdem mit einem weiteren siebten elektrischen Kontakt in der Buchse verbunden sein, der als Proximity-Kontakt oder Proxi-Kontakt bezeichnet wird. Der zweite elektrische Kontakt (24) steht mit einer Massenschutzleitung in Verbindung. Die Ladeelektrik ist außerdem mit einem Wechselstrom-Gleichstrom-Wandler (29) ausgestattet, der als Ladegerät fungiert. Das Ladegerät ist eingangsseitig für 3-phasigen Wechselstrom ausgelegt, wobei der Eingang für die Neutralphase mit dem dritten elektrischen Kontakt (25), und die Eingänge für die Leitungsphasen mit dem vierten elektrischen Kontakt (26), dem fünften elektrischen Kontakt (27) und dem sechsten elektrischen Kontakt (28) verbunden sind. Ausgangsseitig speist es den elektrischen Energiespeicher mit Ladestrom.

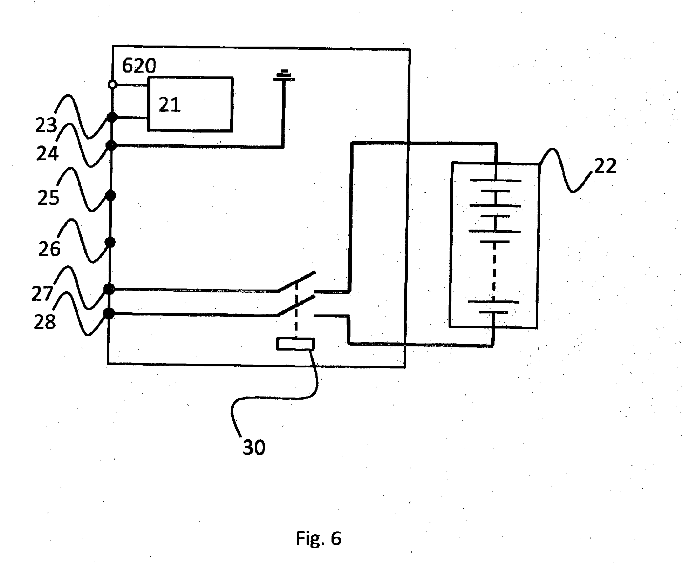

Fig. 6 zeigt die Ladeelektrik (620) eines Fahrzeugs. Das Fahrzeug verfügt über einen elektrischen Energiespeicher (22). Die Ladeelektrik weist eine zweite Ladesteuereinheit (21) und eine Buchse auf, an der das in Fig. 3 beschriebene Ladekabel angeschlossen werden kann. Bevorzugt ist die Buchse leicht zugänglich an der Außenhaut des Fahrzeugs angebracht. Die Buchse verfügt über sechs elektrische Kontakte, mit denen die sechs elektrischen Leitungen des Ladekabels belegungsgleich verbunden werden. Dies bedeutet, dass bei einer belegungsgleichen Verbindung die erste elektrischen Leitung (14) mit dem ersten elektrischen Kontakt (23), die zweite elektrische Leitung (15) mit dem zweiten elektrischen Kontakt (24), die dritte elektrische Leitung (16) mit dem dritten elektrischen Kontakt (25), die vierte elektrische Leitung (17) mit dem vierten elektrischen Kontakt (26), die fünfte elektrische Leitung (18) mit dem fünften elektrischen Kontakt (27) und die sechste elektrische Leitung (19) mit dem sechsten elektrischen Kontakt (28) verbunden ist. Die zweite Ladesteuereinheit ist mit dem ersten elektrischen Kontakt (23) verbunden. Die zweite Ladesteuereinheit kann außerdem mit einem weiteren siebten elektrischen Kontakt in der Buchse verbunden sein, der als Proximity-Kontakt oder Proxi-Kontakt bezeichnet wird. Der zweite elektrische Kontakt (24) steht mit einer Massenschutzleitung in Verbindung. Die Ladeelektrik ist außerdem mit einem zweiten Schaltersystem (30) ausgestattet. Das zweite Schaltersystem trennt in geöffneter Schaltstellung den elektrischen Energiespeicher vom fünften elektrischen Kontakt (27) und vom sechsten elektrischen Kontakt (28). In geschlossener Schaltstellung sind der fünfte elektrischen Kontakt mit dem positiven Potential des elektrischen Energiespeichers und der sechste elektrische Kontakt mit dem negativen Potential des elektrischen Energiespeichers verbunden. Der dritte elektrische Kontakt (25) und der vierte elektrische Kontakt (27) stehen mit dem Fluss von elektrischer Ladeleistung in die Ladeelektrik, um den elektrischen Energiespeicher zu laden, in keinem funktionalen Zusammenhang.

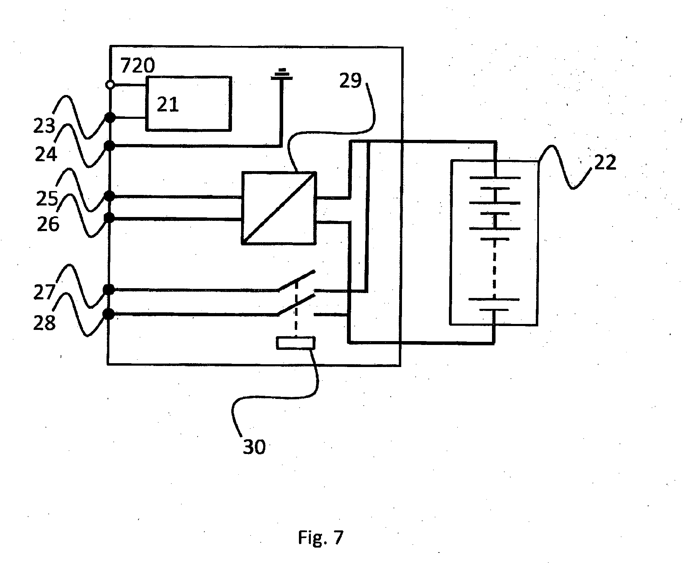

Fig. 7 zeigt die Ladeelektrik (720) eines Fahrzeugs. Das Fahrzeug verfügt über einen elektrischen Energiespeicher (22). Die Ladeelektrik weist eine zweite Ladesteuereinheit (21) und eine Buchse auf, an der das in Fig. 3 beschriebene Ladekabel angeschlossen werden kann. Bevorzugt ist die Buchse leicht zugänglich an der Außenhaut des Fahrzeugs angebracht. Die Buchse verfügt über sechs elektrische Kontakte, mit denen die sechs elektrischen Leitungen des Ladekabels belegungsgleich verbunden werden. Dies bedeutet, dass bei einer belegungsgleichen Verbindung die erste elektrischen Leitung (14) mit dem ersten elektrischen Kontakt (23), die zweite elektrische Leitung (15) mit dem zweiten elektrischen Kontakt (24), die dritte elektrische Leitung (16) mit dem dritten elektrischen Kontakt (25), die vierte elektrische Leitung (17) mit dem vierten elektrischen Kontakt (26), die fünfte elektrische Leitung (18) mit dem fünften elektrischen Kontakt (27) und die sechste elektrische Leitung (19) mit dem sechsten elektrischen Kontakt (28) verbunden ist. Die zweite Ladesteuereinheit ist mit dem ersten elektrischen Kontakt (23) verbunden. Die zweite Ladesteuereinheit kann außerdem mit einem weiteren, siebten elektrischen Kontakt in der Buchse verbunden sein, der als Proximity-Kontakt oder Proxi-Kontakt bezeichnet wird. Der zweite elektrische Kontakt (24) steht mit einer Massenschutzleitung in Verbindung. Die Ladeelektrik ist außerdem mit einem Wechselstrom-Gleichstrom-Wandler (29) ausgestattet, der als Ladegerät fungiert. Das Ladegerät ist eingangsseitig für 1-phasigen Wechselstrom ausgelegt, wobei der Eingang für die Neutralphase mit dem dritten elektrischen Kontakt (25) und der Eingang für die Leitungsphase dem vierten elektrischen Kontakt (26) verbunden ist. Ausgangsseitig speist es den elektrischen Energiespeicher mit Ladestrom. Die Ladeelektrik weist auch ein zweites Schaltersystem (30) auf. Das zweite Schaltersystem trennt in geöffneter Schaltstellung den elektrischen Energiespeicher vom fünften elektrischen Kontakt (27) und vom sechsten elektrischen Kontakt (28). In geschlossener Schaltstellung sind der fünfte elektrische Kontakt mit dem positiven Potential des elektrischen Energiespeichers und der sechste elektrische Kontakt mit dem negativen Potential des elektrischen Energiespeichers verbunden.

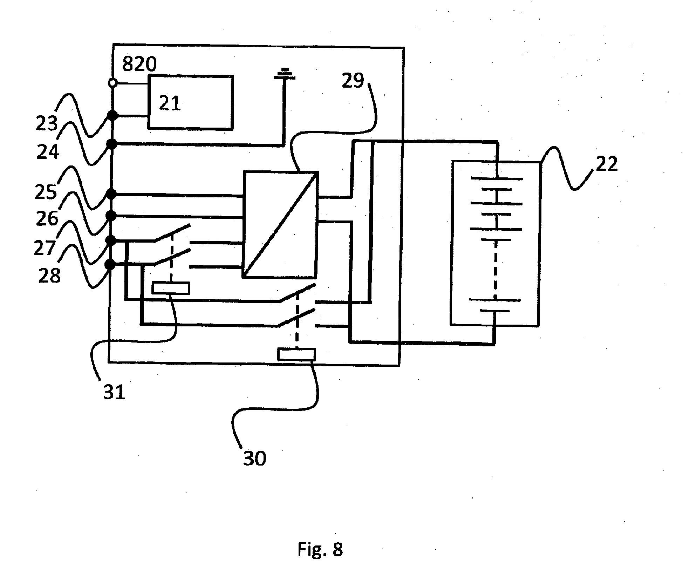

Fig. 8 zeigt die Ladeelektrik (820) eines Fahrzeugs. Das Fahrzeug verfügt über einen elektrischen Energiespeicher (22). Die Ladeelektrik weist eine zweite Ladesteuereinheit (21) und eine Buchse auf, an der das in Fig. 3 beschriebene Ladekabel angeschlossen werden kann. Bevorzugt ist die Buchse leicht zugänglich an der Außenhaut des Fahrzeugs angebracht. Die Buchse verfügt über sechs elektrische Kontakte, mit denen die sechs elektrischen Leitungen des Ladekabels belegungsgleich verbunden werden. Dies bedeutet, dass bei einer belegungsgleichen Verbindung die erste elektrischen Leitung (14) mit dem ersten elektrischen Kontakt (23), die zweite elektrische Leitung (15) mit dem zweiten elektrischen Kontakt (24), die dritte elektrische Leitung (16) mit dem dritten elektrischen Kontakt (25), die vierte elektrische Leitung (17) mit dem vierten elektrischen Kontakt (26), die fünfte elektrische Leitung (18) mit dem fünften elektrischen Kontakt (27) und die sechste elektrische Leitung (19) mit dem sechsten elektrischen Kontakt (28) verbunden ist. Die zweite Ladesteuereinheit ist mit dem ersten elektrischen Kontakt (23) verbunden. Die zweite Ladesteuereinheit kann außerdem mit einem weiteren siebten elektrischen Kontakt in der Buchse verbunden sein, der als Proximity-Kontakt oder Proxi-Kontakt bezeichnet wird. Der zweite elektrische Kontakt (24) steht mit einer Massenschutzleitung in Verbindung. Die Ladeelektrik ist außerdem mit einem zweiten Schaltersystem (30) ausgestattet. Das zweite Schaltersystem trennt in geöffneter Schaltstellung den elektrischen Energiespeicher vom fünften elektrischen Kontakt (27) und vom sechsten elektrischen Kontakt (28). Bei geschlossener Schaltstellung sind der fünfte elektrische Kontakt mit dem positiven Potential des elektrischen Energiespeichers und der sechste elektrische Kontakt mit dem negativen Potential des elektrischen Energiespeichers verbunden. Die Ladeelektrik verfügt weiterhin über einen Wechselstrom-Gleichstrom-Wandler (29), der als Ladegerät fungiert. Das Ladegerät ist eingangsseitig für 3-phasigen Wechselstrom ausgelegt, wobei der Eingang für die Neutralphase mit dem dritten elektrischen Kontakt (25) ist und ein Eingang für eine Leitungsphase mit dem vierten elektrischen Kontakt (26) verbunden ist. Die beiden weiteren Leitungsphasen-Eingänge des Ladegeräts sind über ein drittes Schaltersystem mit dem fünften elektrischen Kontakt (27) und dem sechsten elektrischen Kontakt (28) verbunden. Bei geöffneter Schalterstellung des dritten Schaltersystems ist das Ladegerät über den einen Leitungsphasen-Eingang am vierten elektrischen Kontakt mit elektrischer Leistung speisbar, bei geschlossenem dritten Schaltersystem sind alle drei Leitungsphasen-Eingänge mit elektrischer Leistung speisbar. Ausgangsseitig versorgt das Ladegerät den elektrischen Energiespeicher mit Gleichstrom.

Um den elektrischen Energiespeicher des Fahrzeugs zu laden, wird das Fahrzeug nach einer der Fig. 4, 5, 6, 7 oder 8 über das Ladekabel gemäß Fig. 3 mit einer Ladestation nach einer der Fig. 1 oder 2 verbunden. Eine korrekte und bestimmungsgemäße Verbindung setzt eine belegungsgleiche Verbindung im Sinne dieser Beschreibung voraus. Dies bedeutet, dass der erste elektrische Abgriff (5) mit der ersten elektrischen Leitung (14), der zweite elektrische Abgriff (6) mit der zweiten elektrischen Leitung (15), der dritte elektrische Abgriff (7) mit der dritten elektrischen Leitung (16), der vierte elektrische Abgriff (8) mit der vierten elektrischen Leitung (17), der fünfte elektrische Abgriff (9) mit der fünften elektrischen Leitung (18) und der sechste elektrische Abgriff (10) mit der sechsten elektrischen Leitung (19) verbunden ist und dass die erste elektrischen Leitung (14) mit dem ersten elektrischen Kontakt (23), die zweite elektrische Leitung (15) mit dem zweiten elektrischen Kontakt (24), die dritte elektrische Leitung (16) mit dem dritten elektrischen Kontakt (25), die vierte elektrische Leitung (17) mit dem vierten elektrischen Kontakt (26), die fünfte elektrische Leitung (18) mit dem fünften elektrischen Kontakt (27) und die sechste elektrische Leitung (19) mit dem sechsten elektrischen Kontakt (28) verbunden ist. Falls die Ladeelektrik des Fahrzeugs über einen Proxi-Kontakt und das Ladekabel an dem dem Fahrzeug zugeordneten Ende einen Proxi-Pin aufweisen, sind bei einer belegungsgleichen Verbindung auch der siebte Kontakt und der siebte Pin miteinander verbunden. Dann ist insbesondere die zweite Ladesteuereinheit des Fahrzeugs mit der elektrischen Schaltung verbunden, die den siebten elektrischen Pin des Steckers des Ladekabels mit dem zweiten elektrischen Pin des Ladekabels miteinander verbindet. Mit einem an dem Ausgang der zweiten Ladesteuereinheit angelegten elektrischen Potential, der mit dem siebten elektrischen Kontakt verbunden ist, ist detektierbar, ob eine korrekte Stecker-Buchse-Verbindung vorliegt. Bei einer solchen Verbindung ist beispielsweise das Potential an dem siebten elektrischen Kontakt infolge des Stromflusses durch die elektrische Schaltung, die den siebten elektrischen Pin mit dem zweiten elektrischen Pin verbindet, kleiner als das an dem Ausgang der zweiten Ladesteuereinheit angelegte elektrische Potential, falls die elektrische Schaltung nach dem Prinzip eines Spannungsteilers aufgebaut ist. Im Rahmen der belegungsgleichen Verbindung sind die beiden Ladesteuereinheiten über die erste elektrische Leitung miteinander verbunden, um bidirektional Daten auszutauschen. Der Datenaustauch kann beispielsweise auf einer Kommunikation mittels der Amplituden-Modulation eines pulsweitenmodulierten Signals basieren. Auch eine sogenannte Power-Line-Kommunikation ist umsetzbar. Die Kommunikation ist grundlegend für ein Lademanagement, d.h. die Steuerung, Regelung und Überwachung des Ladevorgangs. Dies beinhaltet die Regelung des ersten Wechselstrom-Gleichstrom-Wandlers und die Steuerung des zweitstufigen Schalters und des ersten Schaltersystems durch die erste Ladesteuereinheit, sowie die Regelung des zweiten Wechselstrom-Gleichstrom-Wandlers und die Steuerung des zweiten und dritten Schaltersystems durch die zweite Ladesteuereinheit. Das Lademanagement ist meist in Form von Software in den beiden Ladesteuereinheiten implementiert, wird im Rahmen des vorliegenden Dokuments aber nicht näher betrachtet. Im Lademanagement sind der Ablauf eines Ladevorgangs und das spezifische Ladeverfahren, d.h. Batterieladespannung und Batterieladestrom in Abhängigkeit von verschiedenen Parametern wie Batterieladezustand, Batterietemperatur, etc., abgebildet.

An einer Ladestation gemäß Fig. 1 kann ein Fahrzeug gemäß Fig. 4 mit einem Ladekabel gemäß Fig. 3 geladen werden. Die erste Ladesteuereinheit (4) stellt den zweistufigen Schalter der Ladestation in die zweite Schaltstufe (12b). Über die dritte (16) und die vierte elektrische Leitung (17) wird das 1-phasige Ladegerät (29) mit Wechselstrom gespeist (Wechselstromladen), welches die Batterie mit Ladegleichstrom versorgt.

An einer Ladestation gemäß Fig. 1 kann ein Fahrzeug gemäß Fig. 5 mit einem Ladekabel gemäß Fig. 3 geladen werden. Die erste Ladesteuereinheit (4) stellt den zweistufigen Schalter der Ladestation in die zweite Schaltstufe (12b). Über die dritte (16) und die vierte elektrische Leitung (17) wird das 3-phasige Ladegerät (29) mit Wechselstrom gespeist (Wechselstromladen), welches die Batterie mit Ladegleichstrom versorgt. Zwei Phaseneingänge am 3-phasigen Ladegerät, d.h. der mit dem fünften (27) und der mit dem sechsten (28) elektrischen Kontakt verbundene Eingang, nehmen beim Wechselstromladen mit 1-phasigem Wechselstrom keine elektrische Leistung auf.

An einer Ladestation gemäß Fig. 1 kann ein Fahrzeug gemäß Fig. 6 mit einem Ladekabel gemäß Fig. 3 geladen werden. Die erste Ladesteuereinheit (4) stellt den zweistufigen Schalter der Ladestation in die erste Schaltstufe (12a) und schließt das erste Schaltersystem (13). Die zweite Ladesteuereinheit (21) schließt das zweite Schaltersystem (30). Über die fünfte (18) und sechste elektrische Leitung (19) wird die Ladeelektrik mit Gleichstrom gespeist (Gleichstromladen) und die Batterie geladen.

An einer Ladestation gemäß Fig. 1 kann ein Fahrzeug gemäß Fig. 7 mit einem Ladekabel gemäß Fig. 3 geladen werden. Die erste Ladesteuereinheit (4) stellt den zweistufigen Schalter in die erste Schaltstufe (12a) und schließt das erste Schaltersystem (13), um die Ladeelektrik des Fahrzeugs mit Gleichstrom zu versorgen (Gleichstromladen). Die zweite Ladesteuereinheit (21) schließt das zweite Schaltersystem (30), so dass die Batterie geladen wird. Die erste Ladesteuereinheit stellt den zweistufigen Schalter der Ladestation in die zweite Schaltstufe (12b), um die Ladeelektrik des Fahrzeugs mit Wechselstrom zu versorgen (Wechselstromladen). Über die dritte (16) und die vierte elektrische Leitung (17) wird das 1-phasige Ladegerät mit Wechselstrom gespeist, welches die Batterie mit Ladegleichstrom versorgt. Die Stellung des zweiten Schaltersystems ist im Falle einer Wechselstromladung ohne Bedeutung. Zusammengefasst kann ein Fahrzeug gemäß Fig. 7 an einer Ladestation gemäß Fig. 1 mit Wechselstrom oder Gleichstrom geladen werden.

An einer Ladestation gemäß Fig. 1 kann ein Fahrzeug gemäß Fig. 8 mit einem Ladekabel gemäß Fig. 3 geladen werden. Die erste Ladesteuereinheit (4) stellt den zweistufigen Schalter in die erste Schaltstufe (12a) und schließt das erste Schaltersystem (30), um die Ladeelektrik des Fahrzeugs mit Gleichstrom zu versorgen (Gleichstromladen). Die zweite Ladesteuereinheit (21) schließt das zweite Schaltersystem (30) und öffnet das dritte Schaltersystem (31). Damit wird die Batterie über die fünfte (18) und sechste elektrische Leitung (19) geladen. Das 3-phasige Ladegerät (29) ist von der fünften und sechsten elektrischen Leitung, über die jeweils elektrische Leistung in Form von Gleichstrom transferiert wird, abgekoppelt. Die erste Ladesteuereinheit stellt den zweistufigen Schalter der Ladestation in die zweite Schaltstufe (12b), um die Ladeelektrik des Fahrzeugs mit Wechselstrom zu versorgen (Wechselstromladen). Über die dritte (16) und die vierte elektrische Leitung (17) wird das 3-phasige Ladegerät mit Wechselstrom gespeist, welches die Batterie mit Ladegleichstrom versorgt. Zwei Phaseneingänge am 3-phasigen Ladegerät, d.h. der mit dem fünften (27) und der mit dem sechsten (28) elektrischen Kontakt verbundene Eingang, nehmen beim Wechselstromladen mit 1-phasigem Wechselstrom keine elektrische Leistung auf. Die Stellungen des zweiten und des dritten Schaltersystems sind im Falle der Wechselstromladung ohne Bedeutung. Zusammengefasst kann ein Fahrzeug gemäß Fig. 8 an einer Ladestation gemäß Fig. 1 mit Wechselstrom oder Gleichstrom geladen werden.

An einer Ladestation gemäß Fig. 2 kann ein Fahrzeug gemäß Fig. 4 mit einem Ladekabel gemäß Fig. 3 geladen werden. Die erste Ladesteuereinheit (4) stellt den zweistufigen Schalter der Ladestation in die zweite Schaltstufe (12b). Über die dritte (16), vierte (17), fünfte (18) und sechste elektrische Leitung (19) wird das 3-phasige Ladegerät (29) gespeist, welches die Batterie mit Ladegleichstrom versorgt. Die fünfte und sechste elektrische Leitung stehen zwar gegen die dritte elektrische Leitung jeweils unter Spannung, es wird von der Ladeelektrik jedoch keine elektrische Leistung aufgenommen.

An einer Ladestation gemäß Fig. 2 kann ein Fahrzeug gemäß Fig. 5 mit einem Ladekabel gemäß Fig. 3 geladen werden. Die erste Ladesteuereinheit (4) stellt den zweistufigen Schalter der Ladestation in die zweite Schaltstufe (12b). Über die dritte (16); vierte (17), fünfte (18) und sechste elektrische Leitung (19) wird das 3-phasige Ladegerät (29) gespeist, welches die Batterie mit Ladegleichstrom versorgt.

An einer Ladestation gemäß Fig. 2 kann ein Fahrzeug gemäß Fig. 6 mit einem Ladekabel gemäß Fig. 3 geladen werden. Die erste Ladesteuereinheit (4) stellt den zweistufigen Schalter der Ladestation in die erste Schaltstufe (12a) und schließt das erste Schaltersystem (13), die zweite Ladesteuereinheit (21) schließt das zweite Schaltersystem (30). Über die dritte (16) und vierte elektrische Leitung (17) wird die Ladeelektrik mit Gleichstrom gespeist und die Batterie geladen.

An einer Ladestation gemäß Fig. 2 kann ein Fahrzeug gemäß Fig. 7 mit einem Ladekabel gemäß Fig. 3 geladen werden. Die erste Ladesteuereinheit (4) stellt den zweistufigen Schalter in die erste Schaltstufe (12a) und schließt das erste Schaltersystem (13), um die Ladeelektrik des Fahrzeugs mit Gleichstrom zu versorgen (Gleichstromladen). Die zweite Ladesteuereinheit (21) schließt das zweite Schaltersystem (30), so dass die Batterie geladen wird. Die erste Ladesteuereinheit stellt den zweistufigen Schalter der Ladestation in die zweite Schaltstufe (12b), um die Ladeelektrik des Fahrzeugs mit Wechselstrom zu versorgen (Wechselstromladen). In diesem Fall öffnet die zweite Ladesteuereinheit das zweite Schaltersystem, so dass das 1-phasige Ladegerät (29) über die dritte (16) und die vierte elektrische Leitung (17) mit Wechselstrom gespeist wird. Die fünfte (18) und sechste elektrische Leitung (19) stehen in diesem Fall zwar gegen die dritte elektrische Leitung jeweils unter Spannung, es wird von der Ladeelektrik jedoch keine elektrische Leistung aufgenommen. Das Ladegerät versorgt die Batterie mit Ladegleichstrom. Zusammengefasst kann ein Fahrzeug gemäß Fig. 7 an einer Ladestation gemäß Fig. 2 mit Wechselstrom oder Gleichstrom geladen werden.

An einer Ladestation gemäß Fig. 2 kann ein Fahrzeug gemäß Fig. 8 mit einem Ladekabel gemäß Fig. 3 geladen werden. Die erste Ladesteuereinheit (4) stellt den zweistufigen Schalter in die erste Schaltstufe (12a), um die Ladeelektrik des Fahrzeugs mit Gleichstrom zu versorgen (Gleichstromladen). Die zweite Ladesteuereinheit (21) schließt das zweite Schaltersystem (30) und öffnet das dritte Schaltersystem (31). Damit wird die Batterie über die fünfte (18) und sechste elektrische Leitung (19) geladen. Das 3-phasige Ladegerät (29) ist von der fünften (18) und sechsten elektrischen Leitung (19), über die jeweils elektrische Leistung in Form von Gleichstrom transferiert wird, abgekoppelt. Die erste Ladesteuereinheit stellt den zweistufigen Schalter der Ladestation in die zweite Schaltstufe (12a), um die Ladeelektrik des Fahrzeugs mit Wechselstrom zu versorgen (Wechselstromladen). Die zweite Ladesteuereinheit öffnet beim Wechselstromladen das zweite Schaltersystem (30) und schließt das dritte Schaltersystem (3). Somit wird das 3-phasige Ladegerät über die dritte (16), vierte (17), fünfte (18) und sechste elektrische Leitung (19) mit Wechselstrom gespeist, welches die Batterie mit Ladegleichstrom versorgt. Die Batterie ist von der fünften und sechsten elektrischen Leitung, die jeweils elektrische Leistung in Form von Wechselstrom transferieren, abgekoppelt. Zusammengefasst kann ein Fahrzeug gemäß Fig. 8 an einer Ladestation gemäß Fig. 2 mit Wechselstrom oder Gleichstrom geladen werden.

Allen zehn beschriebenen Kombinationen von Fahrzeugen und Ladestationen zum Laden eines automobilen elektrischen Energiespeichers ist aus technischer Sicht gemeinsam, dass unabhängig von dem zur Verfügung stehenden externen Wechselstromnetz (2) die gleiche Stecker-Buchse-Verbindung und das gleiche Ladekabel zum Einsatz kommt. Wird je nach zur Verfügung stehendem Wechselstromnetz die Verbreitung der Ladestätionen nach Fig. 1 und/oder Fig. 2 vorausgesetzt, ergibt sich für den Anwender der große Vorteil, dass er unabhängig von der Ladearchitektur des Fahrzeugs einen Ladevorgang an jeder dieser Ladestationen durchführen kann, indem er ein einziges Ladekabel mitführt oder jede Ladestation mit einem technisch gleichen Ladekabel ausgestattet ist. Ein hohes Maß an Flexibilität und eine einfache Bedienbarkeit sind damit gewährleistet. Ferner ist die Ladevorrichtung bei geringer Variantenvielfalt weltweit einsetzbar.

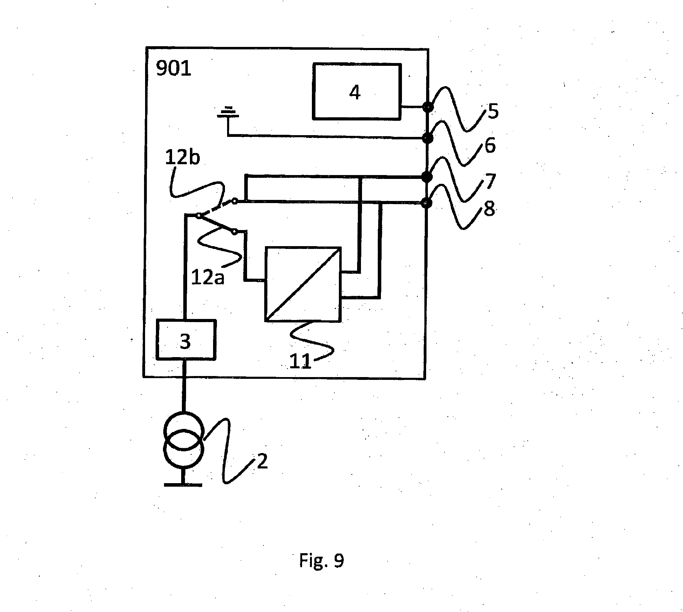

Fig. 9 zeigt eine besondere Ausführungsform einer vereinfachten Ladestation (901), die von einem äußeren Wechselstromnetz (2) gespeist ist, das 1-phasig ausgebildet ist. Zur Glättung der elektrischen Leistung kann ein Netzfilter (3) oder Grid-Filter zum Einsatz kommen. Die Ladestation weist eine erste Ladesteuereinheit (4) und einen ersten Wechselstrom-Gleichstrom-Wandler (11) auf. Die Ladestation weist sechs elektrische Abgriffe nach außen auf, wobei nur vier elektrische Abgriffe nach außen funktional oder nutzbar sind. Deshalb kann die Ladestation in diesem Falle alternativ lediglich über vier elektrische Abgriffe verfügen (5-8). Der erste elektrische Abgriff (5) ist mit der Ladesteuereinheit verbunden. Der zweite elektrische Abgriff (6) ist mit einer Massenschutzleitung verbunden. Die Ladestation weist einen zweistufigen Schalter auf, der in der ersten Schaltstufe (12a) den Wechselstrom-Gleichstrom-Wandler mit elektrischer Leistung speist. Der Ausgang des Wechselstrom-Gleichstrom-Wandlers ist mit dem dritten elektrischen Abgriff (7) und dem vierten elektrischen Abgriff (8) verbunden. Der dritte elektrische Abgriff liegt auf dem positiven Gleichstrompotential und der vierte elektrische Abgriff liegt auf dem negativen Gleichstrompotential. In der zweiten Schaltstufe (12b) verbindet der Schalter die neutrale Phase des externen Wechselstromnetzes mit dem dritten elektrischen Abgriff (7) und die Leitungsphase mit dem vierten elektrischen Abgriff (8). Eine solche Ladestation kann als Ladesäule im öffentlichen Raum oder als sogenannte Wall-Box an einem privaten Hausanschluss installiert sein.

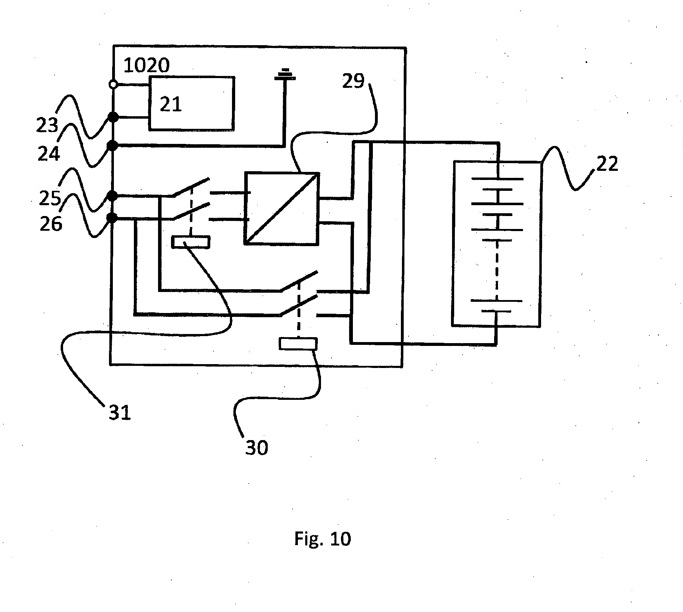

Fig. 10 zeigt eine besondere Ausführungsform einer vereinfachten Ladeelektrik (1020) eines Fahrzeugs. Das Fahrzeug verfügt über einen elektrischen Energiespeicher (22). Die Ladeelektrik weist eine zweite Ladesteuereinheit (21) und eine Buchse auf, an der ein Ladekabel angeschlossen werden kann. Bevorzugt ist die Buchse leicht zugänglich an der Außenhaut des Fahrzeugs angebracht. Die Buchse verfügt über sechs elektrische Kontakte, wobei nur vier elektrische Kontakte funktional genutzt sind. Alternativ kann die Ladeelektrik bzw. die Buchse deshalb auch über nur vier elektrische Kontakte verfügen (23-26). Die zweite Ladesteuereinheit ist mit dem ersten elektrischen Kontakt (23) verbunden. Der zweite elektrische Kontakt (24) steht mit einer Massenschutzleitung in Verbindung. Die zweite Ladesteuereinheit kann außerdem mit einem zusätzlichen elektrischen Kontakt in der Buchse verbunden sein, der als Proximity-Kontakt oder Proxi-Kontakt dient. Die Ladeelektrik weist ein zweites Schaltersystem (30) auf. Das zweite Schaltersystem trennt in geöffneter Schaltstellung den elektrischen Energiespeicher vom dritten elektrischen Kontakt (25) und vom vierten elektrischen Kontakt (26). In geschlossener Schaltstellung sind der dritte elektrische Kontakt mit dem positiven Potential des elektrischen Energiespeichers und der vierte elektrische Kontakt mit dem negativen Potential des elektrischen Energiespeichers verbunden. Die Ladeelektrik ist außerdem mit einem Wechselstrom-Gleichstrom-Wandler (29) ausgestattet, der als Ladegerät fungiert. Das Ladegerät ist eingangsseitig für 1-phasigen Wechselstrom ausgelegt, wobei der Eingang über ein optionales drittes Schaltersystem (31) für die Neutralphase mit dem dritten elektrischen Kontakt (25) und der Eingang für die Leitungsphase mit dem vierten elektrischen Kontakt (26) verbunden ist. Ausgangsseitig speist es den elektrischen Energiespeicher mit Ladestrom.

An einer Ladestation gemäß Fig. 9 kann ein Fahrzeug gemäß Fig. 10 mit einem Ladekabel geladen werden. Falls die Ladestation gemäß Fig. 9 sechs elektrische Abgriffe aufweist und die Ladeelektrik gemäß Fig. 10 sechs elektrische Kontakte aufweist, kann ein Ladekabel gemäß Fig. 3 zum Einsatz kommen. Falls die Ladestation gemäß Fig. 9 alternativ nur vier elektrische Abgriffe aufweist oder die Ladeelektrik gemäß Fig. 10 alternativ nur vier elektrische Kontakte aufweist, kann auch ein Ladekabel mit nur vier elektrischen Leitungen (14-17) unter Beachtung belegungsgleicher Verbindung zum Einsatz kommen. Die erste Ladesteuereinheit (4) stellt den zweistufigen Schalter in die erste Schaltstufe (12a), um die Ladeelektrik des Fahrzeugs mit Gleichstrom zu versorgen (Gleichstromladen). Die zweite Ladesteuereinheit (21) schließt das zweite Schaltersystem (30). Damit wird die Batterie über die dritte (16) und vierte elektrische Leitung (17) geladen. Die erste Ladesteuereinheit stellt den zweistufigen Schalter der Ladestation in die zweite Schaltstufe (12a), um die Ladeelektrik des Fahrzeugs mit Wechselstrom zu versorgen (Wechselstromladen). Die zweite Ladesteuereinheit öffnet beim Wechselstromladen das zweite Schaltersystem (30) und schließt das (optionale) dritte Schaltersystem (31). Somit wird das 1-phasige Ladegerät über die dritte (16) und vierte (17) elektrische Leitung mit Wechselstrom gespeist, welches die Batterie mit Ladegleichstrom versorgt. Die Batterie ist von der dritten und vierten elektrischen Leitung, die jeweils elektrische Leistung in Form von Wechselstrom transferieren, abgekoppelt. Zusammengefasst kann ein Fahrzeug gemäß Fig. 10 an einer Ladestation gemäß Fig. 9 mit Wechselstrom oder Gleichstrom geladen werden.

### Bezugszeichenliste

- 101/201/901: Ladestation
- 2: Externes Wechselstromnetz
- 3: Netzfilter
- 4: Erste Ladesteuereinheit
- 5: Erster elektrischer Abgriff
- 6: Zweiter elektrischer Abgriff
- 7: Dritter elektrischer Abgriff
- 8: Vierter elektrischer Abgriff
- 9: Fünfter elektrischer Abgriff
- 10: Sechster elektrischer Abgriff
- 11: Erster Wechselstrom-Gleichstrom-Wandler
- 12a: Zweistufiger Schalter, erste Schaltstufe
- 12b: Zweistufiger Schalter, zweite Schaltstufe
- 13: Erstes Schaltersystem
- 14: Erste elektrische Leitung
- 15: Zweite elektrische Leitung
- 16: Dritte elektrische Leitung
- 17: Vierte elektrische Leitung
- 18: Fünfte elektrische Leitung
- 19: Sechste elektrische Leitung
- 21: Zweite Ladesteuereinheit
- 420/520/620/720/820/1020: Ladeelektrik
- 22: Elektrischer Energiespeicher
- 23: Erster elektrischer Kontakt
- 24: Zweiter elektrischer Kontakt
- 25: Dritter elektrischer Kontakt
- 26: Vierter elektrischer Kontakt
- 27: Fünfter elektrischer Kontakt
- 28: Sechster elektrischer Kontakt
- 29: Ladegerät, zweiter Wechselstrom-Gleichstrom-Wandler
- 30: Zweites Schaltersystem
- 31: Drittes Schaltersystem

## Patentansprüche

1. Fahrzeugladevorrichtung, umfassend eine Ladestation außerhalb eines Fahrzeugs, ein Ladekabel und eine Ladeelektrik des Fahrzeugs, zum Laden eines elektrischen Energiespeichers (22) des Fahrzeugs mit elektrischer Energie aus einem externen Wechselstromnetz (2), wobei
- die Ladestation eingangsseitig aus dem externen Wechselstromnetz mit elektrischer Leistung speisbar ist,
- das Ladekabel elektrisch mit der Ladestation verbunden ist oder elektrisch an die Ladestation anschließbar ist, und
- das Ladekabel über eine Stecker-Buchse-Verbindung elektrisch an die Ladeelektrik anschließbar ist,
wobei
- die Ladestation sechs elektrische Abgriffe (5-10) aufweist,
- das Ladekabel sechs elektrische Leitungen (14-19) aufweist,
- die sechs elektrischen Abgriffe der Ladestation mit den sechs elektrischen Leitungen des Ladekabels belegungsgleich verbunden und die sechs elektrischen Leitungen des Ladekabels mit mindestens vier elektrischen Kontakten (23-26) der Ladeelektrik belegungsgleich verbunden sind, um den elektrischen Energiespeicher zu laden,
- die Ladestation eine erste Ladesteuereinheit (4) umfasst, die mit dem ersten elektrischen Abgriff (5) elektrisch verbunden ist,
- die Ladeelektrik eine zweite Ladesteuereinheit (21) umfasst, die mit dem ersten elektrischen Kontakt (23) verbunden ist,
- die Ladestation einen Schutzleiter umfasst, der mit dem zweiten elektrischen Abgriff (6) verbunden ist,
- die Ladeelektrik einen Schutzleiter umfasst, der mit dem zweiten elektrischen Kontakt (24) verbunden ist,
- beim Laden die zweite elektrische Leitung (15) als Schutzleitung dient, **dadurch gekennzeichnet, dass** beim Laden die erste Ladesteuereinheit und die zweite Ladesteuereinheit über die erste elektrische Leitung (14) Daten austauschen,
- die Ladestation einen ersten Wechselstrom-Gleichstrom-Wandler (11) aufweist,
- die Ladestation einen zweistufigen Schalter mit einer ersten Schaltstufe (12a) und einer zweiten Schaltstufe (12b) aufweist,
- der zweistufige Schalter von der ersten Ladesteuereinheit steuerbar ist,
- in der ersten Schaltstufe der erste Wechselstrom-Gleichstrom-Wandler eingangsseitig aus dem externen Wechselstromnetz gespeist ist,
- in der zweiten Schaltstufe der dritte elektrische Abgriff (7) mit der neutralen Phase des externen Wechselstromnetzes verbunden ist, und
- in der zweiten Schaltstufe der vierte elektrische Abgriff (8) mit einer Leitungsphase des externen Wechselstromnetzes verbunden ist.

2. Fahrzeugladevorrichtung nach Anspruch 1,
**dadurch gekennzeichnet,**
- **dass** das externe Wechselstromnetz als 1-phasiges Wechselstromnetz ausgebildet ist,
- **dass** der erste Wechselstrom-Gleichstrom-Wandler als 1-phasiger Wechselstrom-Gleichstromwandler ausgebildet ist,
- **dass** der erste 1-phasige Wechselstrom-Gleichstrom-Wandler ausgangsseitig mit dem fünften elektrischen Abgriff (9) und dem sechsten elektrischen Abgriff (10) verbunden ist.

3. Fahrzeugladevorrichtung nach Anspruch 1,
**dadurch gekennzeichnet,**
- **dass** das externe Wechselstromnetz als externes 3-phasiges Wechselstromnetz ausgebildet ist,
- **dass** der erste Wechselstrom-Gleichstrom-Wandler als 3-phasiger Wechselstrom-Gleichstrom-Wandler ausgebildet ist,
- **dass** der erste 3-phasige Wechselstrom-Gleichstrom-Wandler ausgangsseitig über eine erstes Schaltersystem (13) mit dem fünften elektrischen Abgriff und dem sechsten elektrischen Abgriff verbunden ist, und
- **dass** in der zweiten Schaltstufe der fünfte elektrische Abgriff und der sechste elektrische Abgriff jeweils mit einer Leitungsphase des externen 3-phasigen Wechselstromnetzes verbunden sind.

4. Fahrzeugladevorrichtung nach einem der Ansprüche 2 oder 3,
**dadurch gekennzeichnet,**
- **dass** die Ladeelektrik ein 1-phasiges Ladegerät (29) aufweist,
- **dass** das 1-phasige Ladegerät eingangsseitig mit dem dritten elektrischen Kontakt (25) und dem vierten elektrischen Kontakt (26) verbunden ist,
- **dass** das 1-phasige Ladegerät ausgangsseitig mit dem elektrischen Energiespeicher verbunden ist,
- **dass** der Schalter in die zweite Schaltstufe schaltbar ist, um den elektrischen Energiespeicher zu laden.

5. Fahrzeugladevorrichtung nach einem der Ansprüche 2 oder 3,
**dadurch gekennzeichnet,**
- **dass** die Ladeelektrik ein 3-phasiges Ladegerät aufweist,
- **dass** das 3-phasige Ladegerät eingangsseitig mit dem dritten elektrischen Kontakt, dem vierten elektrischen Kontakt, dem fünften elektrischen Kontakt (27) und dem sechsten elektrischen Kontakt (28) verbunden ist,
- **dass** das 3-phasige Ladegerät ausgangsseitig mit dem elektrischen Energiespeicher verbunden ist,
- **dass** der Schalter in die zweite Schaltstufe schaltbar ist, um den elektrischen Energiespeicher zu laden.

6. Fahrzeugladevorrichtung nach Anspruch 2,
**dadurch gekennzeichnet,**
- **dass** die Ladeelektrik ein zweites Schaltersystem (30) aufweist,
- **dass** das zweite Schaltersystem den fünften elektrischen Kontakt und den sechsten elektrischen Kontakt mit dem elektrischen Energiespeicher verbindet,
- **dass** der Schalter in die erste Schaltstufe schaltbar ist und das zweite Schaltersystem schließbar ist, um den elektrischen Energiespeicher zu laden.

7. Fahrzeugladevorrichtung nach Anspruch 3,
**dadurch gekennzeichnet,**
- **dass** die Ladeelektrik ein zweites Schaltersystem aufweist,
- **dass** das zweite Schaltersystem den fünften elektrischen Kontakt und den sechsten elektrischen Kontakt mit dem elektrischen Energiespeicher verbindet,
- **dass** der Schalter in die erste Schaltstufe schaltbar ist, das erste Schaltersystem schließbar ist und das zweite Schaltersystem schließbar ist, um den elektrischen Energiespeicher zu laden.

8. Fahrzeugladevorrichtung nach Anspruch 2,
**dadurch gekennzeichnet,**
- **dass** die Ladeelektrik ein 1-phasiges Ladegerät aufweist,
- **dass** das 1-phasige Ladegerät eingangsseitig mit dem dritten elektrischen Kontakt und dem vierten elektrischen Kontakt verbunden ist,
- **dass** das 1-phasige Ladegerät ausgangsseitig mit dem elektrischen Energiespeicher verbunden ist,
- **dass** die Ladeelektrik ein zweites Schaltersystem aufweist,
- **dass** das zweite Schaltersystem den fünften elektrischen Kontakt und den sechsten elektrischen Kontakt mit dem elektrischen Energiespeicher verbindet,
- **dass** der Schalter in die erste Schaltstufe schaltbar und das zweite Schaltersystem schließbar ist, um den elektrischen Energiespeicher zu laden oder der Schalter in die zweite Schaltstufe schaltbar ist und das zweite Schaltersystem geöffnet werden kann, um den elektrischen Energiespeicher zu laden.

9. Fahrzeugladevorrichtung nach Anspruch 3,
**dadurch gekennzeichnet,**
- **dass** die Ladeelektrik ein 1-phasiges Ladegerät aufweist,
- **dass** das 1-phasige Ladegerät eingangsseitig mit dem dritten elektrischen Kontakt und dem vierten elektrischen Kontakt verbunden ist,
- **dass** das 1-phasige Ladegerät ausgangsseitig mit dem elektrischen Energiespeicher verbunden ist,
- **dass** die Ladeelektrik ein zweites Schaltersystem aufweist,
- **dass** das zweite Schaltersystem den fünften elektrischen Kontakt und den sechsten elektrischen Kontakt mit dem elektrischen Energiespeicher verbindet,
- **dass** der Schalter in die erste Schaltstufe schaltbar, das erste Schaltersystem schließbar und das zweite Schaltersystem schließbar ist, um den elektrischen Energiespeicher zu laden, oder der Schalter in die zweite Schaltstufe schaltbar ist und das zweite Schaltersystem geöffnet werden kann, um den elektrischen Energiespeicher zu laden.

10. Fahrzeugladevorrichtung nach Anspruch 2,
**dadurch gekennzeichnet,**
- **dass** die Ladeelektrik ein 3-phasiges Ladegerät und ein zweites Schaltersystem aufweist,
- **dass** das 3-phasige Ladegerät eingangsseitig mit dem dritten elektrischen Kontakt und mit dem vierten elektrischen Kontakt verbunden ist und über das zweite Schaltersystem mit dem fünften elektrischen Kontakt und dem sechsten elektrischen Kontakt verbunden ist,
- **dass** das 3-phasige Ladegerät ausgangsseitig mit dem elektrischen Energiespeicher verbunden ist,
- **dass** die Ladeelektrik ein drittes Schaltersystem aufweist,
- **dass** das dritte Schaltersystem den fünften elektrischen Kontakt und den sechsten elektrischen Kontakt mit dem elektrischen Energiespeicher verbindet,
- **dass** der Schalter in die erste Schaltstufe schaltbar ist, das zweite Schaltersystem geöffnet werden kann und das dritte Schaltersystem schließbar ist, um den elektrischen Energiespeicher zu laden, oder der Schalter in die zweite Schaltstufe schaltbar ist, um den elektrischen Energiespeicher zu laden.

11. Fahrzeugladevorrichtung nach Anspruch 3,
**dadurch gekennzeichnet,**
- **dass** die Ladeelektrik ein 3-phasiges Ladegerät und ein zweites Schaltersystem aufweist,
- **dass** das 3-phasige Ladegerät eingangsseitig mit dem dritten elektrischen Kontakt und mit dem vierten elektrischen Kontakt verbunden ist und über das zweite Schaltersystem mit dem fünften elektrischen Kontakt und dem sechsten elektrischen Kontakt verbunden ist,
- **dass** das 3-phasige Ladegerät ausgangsseitig mit dem elektrischen Energiespeicher verbunden ist,
- **dass** die Ladeelektrik ein drittes Schaltersystem (31) aufweist,
- **dass** das dritte Schaltersystem den fünften elektrischen Kontakt und den sechsten elektrischen Kontakt mit dem elektrischen Energiespeicher verbindet,
- **dass** der Schalter in die erste Schaltstufe schaltbar ist, das erste Schaltersystem schließbar ist, das zweite Schaltersystem geöffnet werden kann und das dritte Schaltersystem schließbar ist, um den elektrischen Energiespeicher zu laden, oder der Schalter in die zweite Schaltstufe schaltbar ist, das zweite Schaltersystem schließbar ist und das dritte Schaltersystem geöffnet werden kann, um den elektrischen Energiespeicher zu laden.

## Claims

1. A vehicle charging device, comprising a charging station outside a vehicle, a charging cable and an electric charging unit of the vehicle, to charge an electric energy store (22) of the vehicle with electric energy from an external alternating current network (2), wherein
- the charging station can be fed with electric power on the input side from the external alternating current network,
- the charging cable is electrically connected to the charging station or can be electrically connected to the charging station, and
- the charging cable can be electrically connected to the electric charging unit by a plug and socket connection,
- the charging station has six electric taps (5 to 10),
- the charging cable has six electric lines (14 to 19),
- the six electric taps of the charging station are connected in the same configuration to the six electric lines of the charging cable and the six electric lines of the charging cable are connected in the same configuration to at least four electric contacts (23 to 26) of the electric charging unit in order to charge the electric energy store,
- the charging station comprises a first charging control unit (4), which is electrically connected to the first electric tap (5),
- the electric charging unit comprises a second charging control unit (21), which is connected to the first electric contact (23),
- the charging station comprises a protective conductor, which is connected to the second electric tap (6),
- the electric charging unit comprises a protective conductor, which is connected to the second electric contact (24),
- during charging, the second electric line (15) is used as a protective line, **characterised in that** on charging the first charging control unit and the second charging control unit exchange data via the first electric line (14),
- the charging station has a first alternating current to direct current converter (11),
- the charging station has a two-stage switch with a first switching stage (12a) and a second switching stage (12b),
- the two-stage switch can be controlled by the first charging control unit,
- in the first switching stage, the first alternating current to direct current converter is fed on the input side from the external alternating current network,
- in the second switching stage, the third electric tap (7) is connected to the neutral phase of the external alternating current network, and
- in the second switching stage, the fourth electric tap (8) is connected to a conduction phase of the external alternating current network.

2. A vehicle charging device according to claim 1, **characterised in that**
- the external alternating current network is configured as a 1-phase alternating current network,
- the first alternating current to direct current converter is configured as a 1-phase alternating current to direct current converter,
- the first 1-phase alternating current to direct current converter is connected on the output side to the fifth electric tap (9) and the sixth electric tap (10).

3. A vehicle charging device according to claim 1, **characterised in that**
- the external alternating current network is configured as an external 3-phase alternating current network,
- the first alternating current to direct current converter is configured as a 3-phase alternating current to direct current converter,
- the first 3-phase alternating current to direct current converter is connected on the output side by a first switch system (13) to the fifth electric tap and the sixth electric tap, and
- in the second switching stage, the fifth electric tap and the sixth electric tap are each connected to a conduction phase of the external 3-phase alternating current network.

4. A vehicle charging device according to either of claims 2 or 3, **characterised in that**
- the electric charging unit has a 1-phase charging apparatus (29),
- the 1-phase charging apparatus is connected on the input side to the third electric contact (25) and the fourth electric contact (26),
- the 1-phase charging apparatus is connected on the output side to the electric energy store,
- the switch can be switched to the second switching stage to charge the electric energy store.

5. A vehicle charging device according to either of claims 2 or 3, **characterised in that**
- the electric charging unit has a 3-phase charging apparatus,
- the 3-phase charging apparatus is connected on the input side to the third electric contact, the fourth electric contact, the fifth electric contact (27) and the sixth electric contact (28),
- the 3-phase charging apparatus is connected on the output side to the electric energy store,
- the switch can be switched to the second switching stage to charge the electric energy store.

6. A vehicle charging device according to claim 2, **characterised in that**
- the electric charging unit has a second switch system (30),
- the second switch system connects the fifth electric contact and the sixth electric contact to the electric energy store,
- the switch can be switched to the first switching stage and the second switch system can be closed to charge the electric energy store.

7. A vehicle charging device according to claim 3, **characterised in that**
- the electric charging unit has a second switch system,
- the second switch system connects the fifth electric contact and the sixth electric contact to the electric energy store,
- the switch can be switched to the first switching stage, the first switch system can be closed and the second switch system can be closed to charge the electric energy store.

8. A vehicle charging device according to claim 2, **characterised in that**
- the electric charging unit has a 1-phase charging apparatus,
- the 1-phase charging apparatus is connected on the input side to the third electric contact and the fourth electric contact,
- the 1-phase charging apparatus is connected on the output side to the electric energy store,
- the electric charging unit has a second switch system,
- the second switch system connects the fifth electric contact and the sixth electric contact to the electric energy store,
- the switch can be switched to the first switching stage and the second switch system can be closed in order to charge the electric energy store or the switch can be switched to the second switching stage and the second switch system can be opened to charge the electric energy store.

9. A vehicle charging device according to claim 3, **characterised in that**
- the electric charging unit has a 1-phase charging apparatus,
- the 1-phase charging apparatus is connected on the input side to the third electric contact and the fourth electric contact,
- the 1-phase charging apparatus is connected on the output side to the electric energy store,
- the electric charging unit has a second switch system,
- the second switch system connects the fifth electric contact and the sixth electric contact to the electric energy store,
- the switch can be switched to the first switching stage, the first switch system can be closed and the second switch system can be closed in order to charge the electric energy store, or the switch can be switched to the second switching stage and the second switch system can be opened in order to charge the electric energy store.

10. A vehicle charging device according to claim 2, **characterised in that**
- the electric charging unit has a 3-phase charging apparatus and a second switch system,
- the 3-phase charging apparatus is connected on the input side to the third electric contact and the fourth electric contact and is connected by the second switch system to the fifth electric contact and the sixth electric contact,
- the 3-phase charging apparatus is connected on the output side to the electric energy store,
- the electric charging unit has a third switch system,
- the third switch system connects the fifth electric contact and the sixth electric contact to the electric energy store,
- the switch can be switched to the first switching stage, the second switch system can be opened and the third switch system can be closed in order to charge the electric energy store, or the switch can be switched to the second switching stage to charge the electric energy store.

11. A vehicle charging device according to claim 3, **characterised in that**
- the electric charging unit has a 3-phase charging apparatus and a second switch system,
- the 3-phase charging apparatus is connected on the input side to the third electric contact and the fourth electric contact and is connected by the second switch system to the fifth electric contact and the sixth electric contact,
- the 3-phase charging apparatus is connected on the output side to the electric energy store,
- the electric charging unit has a third switch system (31),
- the third switch system connects the fifth electric contact and the sixth electric contact to the electric energy store,
- the switch can be switched to the first switching stage, the first switch system can be closed, the second switch system can be opened and the third switch system can be closed to charge the electric energy store, or the switch can be switched to the second switching stage, the second switch system can be closed and the third switch system can be opened to charge the electric energy store.

## Revendications

1. Dispositif de charge d'un véhicule comprenant un poste de charge situé à l'extérieur du véhicule, un câble de charge et un système électrique de charge du véhicule pour permettre de charger un accumulateur d'énergie électrique (22) du véhicule en énergie électrique à partir d'un réseau de courant alternatif externe (2), dans lequel :
- le poste de charge peut être alimenté en puissance électrique côté entrée à partir du réseau de courant alternatif externe,
- le câble de charge est relié électriquement au poste de charge ou peut être relié électriquement au poste de charge, et
- le câble de charge peut être raccordé électriquement au système électrique de charge par une liaison mâle-femelle,
- le poste de charge comprend six prises électriques (5-10),
- le câble de charge comprend six conducteurs électriques (14-19),
- les six prises électriques du poste de charge sont reliées avec la même disponibilité avec les six conducteurs électriques du câble électrique et les six conducteurs électrique du câble de charge sont reliés avec au moins quatre contacts électriques (23-26) du système électrique de charge avec la même disponibilité pour permettre de charger l'accumulateur d'énergie électrique,
- le poste de charge comprend une première unité de commande de charge (4) qui est électriquement reliée à la première prise électrique (5),
- le système électrique de charge comprend une seconde unité de commande de charge (21) qui est reliée au premier contact électrique (23),
- le poste de charge comprend un conducteur de protection qui est relié à la seconde prise électrique (6),
- le système électrique de charge comprend un conducteur de protection qui est relié au second contact électrique (24),
- lors de la charge, le second conducteur électrique (15) fait office de conducteur de protection,
**caractérisé en ce que**
- lors de la charge, la première unité de commande de charge et la seconde unité de commande de charge échangent des données par l'intermédiaire du premier conducteur électrique (14),
- le poste de charge comprend un premier transformateur courant alternatif-courant continu (11),
- le poste de charge comprend un commutateur a deux étages comprenant un premier étage de commutation (12a) et un second étage de commutation (12b),
- le commutateur à deux étages peut être commandé par la première unité de commande de charge,
- dans le premier étage de commutation, le transformateur courant alternatif-courant continu est alimenté côté entrée à partir du réseau de courant alternatif externe,
- dans le second étage de commutation, la troisième prise électrique (7) est reliée à la phase neutre du réseau de courant alternatif externe, et
- dans le second étage de commutation, la quatrième prise électrique (8) est reliée à une phase conductrice du réseau de courant alternatif externe.

2. Dispositif de charge d'un véhicule conforme à la revendication 1, **caractérisé en ce que**
- le réseau de courant alternatif externe est réalisé sous la forme d'un réseau de courant alternatif monophasé,
- le premier transformateur courant alternatif-courant continu est réalisé sous la forme d'un transformateur courant alternatif-courant continu monophasé,
- le premier transformateur courant alternatif-courant continu monophasé est relié côté sortie à la cinquième prise électrique (9) et à la sixième prise électrique (10).

3. Dispositif de charge d'un véhicule conforme à la revendication 1, **caractérisé en ce que**
- le réseau de courant alternatif externe est réalisé sous la forme d'un réseau de courant alternatif triphasé,
- le premier transformateur courant alternatif-courant continu est réalisé sous la forme d'un transformateur courant alternatif-courant continu triphasé,
- le premier transformateur courant alternatif-courant continu monophasé est relié côté sortie par un premier système de commutateur (13) à la cinquième prise électrique et à la sixième prise électrique, et
- dans le second étage de commutation, la cinquième prise électrique et la sixième prise électrique sont respectivement reliées à une phase conductrice du réseau de courant alternatif triphasé externe.

4. Dispositif de charge d'un véhicule conforme à l'une des revendications 2 et 3,
**caractérisé en ce que**
- le système électrique de charge comporte un appareil de charge monophasé (29),
- l'appareil de charge monophasé est relié côté entrée au troisième contact électrique (25) et au quatrième contact électrique (26),
- l'appareil de charge monophasé (1) est relié côté sortie à l'accumulateur d'énergie électrique,
- le commutateur peut être commuté dans le second étage de commutation pour charger l'accumulateur d'énergie électrique.

5. Dispositif de charge d'un véhicule conforme à l'une des revendications 2 et 3,
**caractérisé en ce que**
- le système électrique de charge comporte un appareil de charge triphasé,
- l'appareil de charge triphasé est relié côté entrée au troisième contact électrique, au quatrième contact électrique, au cinquième contact électrique (27) et au sixième contact électrique (28),
- l'appareil de charge triphasé est relié côté sortie à l'accumulateur d'énergie électrique,
- le commutateur peut être commuté dans le second étage de commutation pour charger l'accumulateur d'énergie électrique.

6. Dispositif de charge d'un véhicule conforme à la revendication 2, **caractérisé en ce que**
- le système électrique de charge comporte un second système de commutateur (30),
- le second système de commutateur (30) relie le cinquième contact électrique et le sixième contact électrique avec l'accumulateur d'énergie électrique,
- le commutateur peut être commuté dans le premier étage de commutation et le second système de commutateur peut être fermé pour charger l'accumulateur d'énergie électrique.

7. Dispositif de charge d'un véhicule conforme à la revendication 3, **caractérisé en ce que**
- le système électrique de charge comporte un second système de commutateur,
- le second système de commutateur relie le cinquième contact électrique et le sixième contact électrique avec l'accumulateur d'énergie électrique,
- le commutateur peut être commuté dans le premier étage de commutation, le premier système de commutateur peut être fermé et le second système de commutateur peut être fermé pour charger l'accumulateur d'énergie électrique.

8. Dispositif de charge d'un véhicule conforme à la revendication 2, **caractérisé en ce que**
- le système électrique de charge comporte un appareil de charge monophasé,
- l'appareil de charge monophasé est relié côté entrée au troisième contact électrique et au quatrième contact électrique,
- l'appareil de charge monophasé est relié côté sortie à l'accumulateur d'énergie électrique,
- le système électrique de charge comprend un second système de commutateur,
- le second système de commutateur relie le cinquième contact électrique et le sixième contact électrique avec l'accumulateur d'énergie électrique,
- le commutateur peut être commuté dans le premier étage de commutation et le second système de commutateur peut être fermé pour charger l'accumulateur d'énergie électrique, ou le commutateur peut être commuté dans le second étage de commutation et le second système de commutateur peut être ouvert pour charger l'accumulateur d'énergie électrique.

9. Dispositif de charge d'un véhicule conforme à la revendication 3, **caractérisé en ce que**
- le système électrique de charge comporte un appareil de charge monophasé,
- l'appareil de charge monophasé est relié côté entrée au troisième contact électrique et au quatrième contact électrique,
- l'appareil de charge monophasé est relié côté sortie à l'accumulateur d'énergie électrique,
- le système électrique de charge comprend un second système de commutateur,
- le second système de commutateur relie le cinquième contact électrique et le sixième contact électrique avec l'accumulateur d'énergie électrique,
- le commutateur peut être commuté dans le premier étage de commutation, le premier système de commutateur peut être fermé et le second système de commutateur peut être fermé pour charger l'accumulateur d'énergie électrique, ou le commutateur peut être commuté dans le second étage de commutation et le second système de commutateur peut être ouvert pour charger l'accumulateur d'énergie électrique.

10. Dispositif de charge d'un véhicule conforme à la revendication 2, **caractérisé en ce que**
- le système électrique de charge comporte un appareil de charge triphasé et un second système de commutateur,
- l'appareil de charge triphasé est relié côté entrée au troisième contact électrique et au quatrième contact électrique, et est relié par l'intermédiaire du second système de commutateur au cinquième contact électrique et au sixième contact électrique,
- l'appareil de charge triphasé est relié côté sortie à l'accumulateur d'énergie électrique,
- le système électrique de charge comprend un troisième système de commutateur,
- le troisième système de commutateur relie le cinquième contact électrique et le sixième contact électrique avec l'accumulateur d'énergie électrique,
- le commutateur peut être commuté dans le premier étage de commutation, le second système de commutateur peut être ouvert et le troisième système de commutateur peut être fermé pour charger l'accumulateur d'énergie électrique, ou le commutateur peut être commuté dans le second étage de commutation pour charger l'accumulateur d'énergie électrique.

11. Dispositif de charge d'un véhicule conforme à la revendication 3, **caractérisé en ce que**
- le système électrique de charge comporte un appareil de charge triphasé et un second système de commutateur,
- l'appareil de charge triphasé est relié côté entrée au troisième contact électrique et au quatrième contact électrique, et est relié par l'intermédiaire du second système de commutateur au cinquième contact électrique et au sixième contact électrique,
- l'appareil de charge triphasé est relié côté sortie avec l'accumulateur d'énergie électrique,
- le système électrique de charge comprend un troisième système de commutateur (31),
- le troisième système de commutateur relie le cinquième contact électrique et le sixième contact électrique avec l'accumulateur d'énergie électrique,
- le commutateur peut être commuté dans le premier étage de commutation, le premier système de commutateur peut être fermé, le second système de commutateur peut être ouvert et le troisième système de commutateur peut être fermé pour charger l'accumulateur d'énergie électrique, ou le commutateur peut être commuté dans le second étage de commutation, le second système de commutateur peut être fermé et le troisième système de commutateur peut être ouvert pour charger l'accumulateur d'énergie électrique.
